# EUROPEAN PATENT APPLICATION

(11) **EP 4 779 448 A1**
(43) Date of publication of application: **22.07.2026**
(21) Application number: 24945400.0
(22) Date of filing: 23.12.2024
(51) Int. Cl.: G06F 3/0484, G06F 3/0488

(54) **INTERFACE SWITCHING METHOD AND RELATED APPARATUS**

(30) Priority: 20.06.2024 CN 202410808565
(71) Applicant: HUAWEI TECHNOLOGIES CO., LTD., Shenzhen 518129 (CN)
(72) Inventor: YANG, Zhiyan, Shenzhen, Guangdong 518129 (CN); DING, Yaling, Shenzhen, Guangdong 518129 (CN); WANG, Miao, Shenzhen, Guangdong 518129 (CN); DING, Chenpeng, Shenzhen, Guangdong 518129 (CN); CHEN, Yuhan, Shenzhen, Guangdong 518129 (CN); YAO, Ruijiang, Shenzhen, Guangdong 518129 (CN)
(74) Representative: Goddar, Heinz J.
(86) International application number: PCT/CN2024/141569
(87) International publication number: WO 2025/260676

(57) **Abstract**

Disclosed in the present application are an interface switching method and a related apparatus, which are applied to terminal devices. The present application is characterized in that the method comprises: displaying a first interface; and switching from the first interface to a second interface, wherein each of the first interface and the second interface comprises at least one shared element, the at least one shared element comprises a first shared element, and an interface switching animation for switching from the first interface to the second interface comprises: the first shared element being deformed and moved on the first interface, and, after the deformation and movement are completed, the first shared element being displayed on the second interface. In this way, a smoother transition effect can be presented during interface switching, thus providing users with smoother operation experience.

## Description

This application claims priority to Chinese Patent Application No. 202410808565.6, filed with the China National Intellectual Property Administration on June 20, 2024 and entitled "INTERFACE SWITCHING METHOD AND RELATED APPARATUS", which is incorporated herein by reference in its entirety.

### TECHNICAL FIELD

This application relates to the field of electronic technologies, and in particular, to an interface switching method and a related apparatus.

### BACKGROUND

With development of the mobile internet, intelligent terminals such as smartphones, tablet computers, and notebook computers are widely used in daily life, and become platforms for new media, e-commerce, and information services.

To protect personal information and privacy, avoid a misoperation, or save power, the intelligent terminal usually has a screen lock (namely, screen lock) function. When a screen is locked, a user can use more functions of the intelligent terminal only after the screen is unlocked. For example, a home screen is displayed after the screen is unlocked.

To improve user experience, a simple information service can also be provided for the user in a screen-off (that is, when the screen is turned off) state of the intelligent terminal given that the intelligent terminal has an always on display (always on display, AOD) AOD function. An AOD interface may be used to display general information such as a date, time, and weather.

A high-frequency scenario in which the user uses the intelligent terminal includes: entering the home screen from the AOD interface/lock screen interface, entering the AOD interface/lock screen interface from the home screen, entering the lock screen interface from the AOD interface, or entering the AOD interface from the lock screen interface. Currently, interface switching in the high-frequency scenario is stiff, with insufficient visual fluidity. How to perform interface switching in the high-frequency scenario to display seamless transition effect and offer smoother operation experience to the user needs to be further studied.

### SUMMARY

Embodiments of this application provide an interface switching method, which can achieve seamless transition effect during interface switching, thereby offering users smoother operation experience.

According to a first aspect, this application provides an interface switching method. The method includes: displaying a first interface; switching the first interface to a second interface, where the first interface and the second interface include at least one shared element, and the at least one shared element includes a first shared element; and interface switching animation effect of switching the first interface to the second interface includes: deforming and moving the first shared element in the first interface; and displaying the first shared element in the second interface after deformation and movement end.

Through implementation of this embodiment of this application, in a process of switching the first interface to the second interface, the shared element is deformed and moved in the first interface, and is displayed in the second interface after the deformation and movement of the shared element end. In this way, when interface switching is performed between the first interface and the second interface, through the animation effect of deforming and moving the shared element in the two interfaces, the shared element can display seamless transition effect, to avoid abrupt and stiff changes of the shared element, thereby offering users smoother operation experience.

In an implementation, deforming and moving the first shared element in the first interface includes: deforming the first shared element from a first layout style to a second layout style in the first interface, and moving the first shared element from a first display location to a second display location; and displaying the first shared element in the second interface includes: displaying the first shared element at the second display location in the second interface in the second layout style. Through implementation of this embodiment of this application, the second layout style and the second display location of the shared element in the second interface are determined. When interface switching is performed between the first interface and the second interface, the shared element may be deformed into the second layout style in the first interface and moved to the second display location, so that the shared element can display seamless transition effect, to avoid abrupt and stiff changes of the shared element when the second interface is displayed, thereby offering users smoother operation experience.

In an implementation, an interface element other than the shared element in the first interface is a non-shared element in the first interface, and an interface element other than the shared element in the second interface is a non-shared element in the second interface; and the interface switching animation effect of switching the first interface to the second interface further includes: gradually blurring the non-shared element in the first interface until the non-shared element disappears; and gradually making the burred non-shared element in the second interface become clear. Through implementation of this embodiment of this application, during interface switching, the non-shared element in the first interface can be prevented from suddenly disappearing and the non-shared element in the second interface can be prevented from being suddenly displayed, thereby avoiding stiff and abrupt changes of interface switching effect, improving transition smoothness of interface switching, thereby offering users smoother operation experience.

In an implementation, the first interface and the second interface include any two of the following interfaces: a lock screen interface, an always on display AOD interface, and a home screen. Through implementation of this embodiment of this application, smoother interface transition effect can be displayed in a high-frequency interface switching scenario, to avoid abrupt and stiff changes in interface switching, thereby offering users smoother operation experience.

In an implementation, the first shared element is any one of the following: a clock component, a service widget, an application entry, a system tool, and the like. Through implementation of this embodiment of this application, various shared elements can display smoother interface transition effect, thereby offering users smoother operation experience.

In an implementation, the method further includes: detecting a sliding operation, where the sliding operation is used to switch the first interface to the second interface; and displaying, by the terminal device, a part or all of the interface switching animation effect along with the sliding operation. Through implementation of this embodiment of this application, when interface switching is performed through the sliding operation, progressive interface switching animation effect provided in this application can be presented with the sliding of the sliding operation. In this way, visual effect of sliding with the hand can be provided, smoother interface transition effect can be displayed, thereby offering users smoother operation experience.

In an implementation, displaying, by the terminal device, the part or all of the interface switching animation effect along with the sliding operation includes: when detecting that the sliding operation is started, with sliding of the sliding operation, deforming and moving the first shared element in the first interface, and gradually blurring the non-shared element in the first interface; and when progress of the deformation and movement reaches a first value, gradually making the initially blurred non-shared element in the second interface become clear. Through implementation of this embodiment of this application, the non-shared element in the second interface starts to be displayed only when the progress of the deformation and movement of the shared element reaches the first value, and is gradually clear until the non-shared element is completely displayed. In this way, smoother interface transition effect can be displayed, thereby offering users smoother operation experience, and enhancing interest of interface switching.

In an implementation, displaying, by the terminal device, the part or all of the interface switching animation effect along with the sliding operation includes: when detecting that the sliding operation is started, with sliding of the sliding operation, deforming and moving the first shared element in the first interface, and gradually blurring the non-shared element in the first interface; and when detecting that a user ends the sliding operation, gradually making the initially blurred non-shared element in the second interface become clear. Through implementation of this embodiment of this application, before the user ends the sliding operation, the non-shared element in the first interface is gradually blurred, and after the user ends the sliding operation, the non-shared element in the second interface is gradually clear. In this way, smoother interface transition effect can also be displayed, thereby offering users smoother operation experience, and enhancing the interest of interface switching.

In an implementation, when the deformation and movement end, the terminal device stops displaying the first interface and displays the second interface. Through implementation of this embodiment of this application, when the deformation and movement of the shared element end, the first interface is completely switched to the second interface. In this way, smoother interface transition effect can be displayed, thereby offering users smoother operation experience, and enhancing the interest of interface switching.

In an implementation, the first shared element presents the second layout style at the second display location in the second interface; and when detecting that the user ends the sliding operation, the terminal device performs one or more of the following: continuing to deform and move the first shared element in the first interface until the first shared element is deformed into the second layout style in the first interface and moved to the second display location; continuing to blur the non-shared element in the first interface until the non-shared element disappears; and continuing to make the non-shared element that is in the second interface and that is burred clear until the non-shared element is completely displayed. Through implementation of this embodiment of this application, if the interface switching animation effect is not completed when the user ends the sliding operation, the interface switching animation effect continues.

In an implementation, switching the first interface to the second interface includes: after detecting that a first operation is completed, switching the first interface to the second interface, where the first operation is used to switch the first interface to the second interface. Through implementation of this embodiment of this application, after the user performs the first operation used for interface switching, the progressive interface switching animation effect is presented. This can achieve smoother interface transition effect, thereby offering users smoother operation experience, and enhancing the interest of interface switching.

In an implementation, switching the first interface to the second interface includes: after detecting that the terminal device meets a preset condition, switching the first interface to the second interface. Through implementation of this embodiment of this application, after the preset condition used to trigger interface switching is detected, the progressive interface switching animation effect is presented. This can achieve smoother interface transition effect, thereby offering users smoother operation experience, and enhancing the interest of interface switching.

According to a second aspect, an embodiment of this application provides a terminal device. The electronic device includes a processor and a memory, the memory is coupled to the processor, the memory is configured to store computer program code, the computer program code includes computer instructions, and when the processor reads the computer instructions from the memory, the terminal device is enabled to perform the interface switching method according to the first aspect.

According to a third aspect, an embodiment of this application provides a computer-readable storage medium, including computer instructions. When the computer instructions are run on an electronic device, the electronic device is enabled to perform the interface switching method according to any possible implementation of the first aspect.

According to a fourth aspect, an embodiment of this application provides a computer program product. When the computer program product runs on a computer, the computer is enabled to perform the interface switching method according to any possible implementation of the first aspect.

### BRIEF DESCRIPTION OF DRAWINGS

FIG. 1A to FIG. 1D are diagrams of common user interfaces according to an embodiment of this application;
FIG. 2 is a diagram of interface switching in high-frequency scenarios according to an embodiment of this application;
FIG. 3A to FIG. 3D are interface diagrams for switching a normal lock screen interface to a home screen according to an embodiment of this application;
FIG. 3E to FIG. 3H are interface diagrams of fade-in animation effect according to an embodiment of this application;
FIG. 3I to FIG. 3O are interface diagrams of transition animation effect according to an embodiment of this application;
FIG. 4A to FIG. 4D are interface diagrams for switching a normal lock screen interface to a dual-clock home screen according to an embodiment of this application;
FIG. 5A to FIG. 5D are interface diagrams for switching a notification lock screen interface to a home screen according to an embodiment of this application;
FIG. 6A to FIG. 6D are interface diagrams for switching an immersive lock screen interface to a home screen according to an embodiment of this application;
FIG. 7A to FIG. 7D are interface diagrams for switching an AOD interface to a home screen according to an embodiment of this application;
FIG. 8A to FIG. 8D are interface diagrams for switching an immersive AOD interface to a home screen according to an embodiment of this application;
FIG. 9A to FIG. 9D are interface diagrams for switching a home screen to an AOD interface according to an embodiment of this application;
FIG. 10A to FIG. 10D are interface diagrams for switching a normal lock screen interface to an AOD interface according to an embodiment of this application;
FIG. 11A to FIG. 11D are a schematic flowchart of an interface switching method according to an embodiment of this application;
FIG. 12A to FIG. 12E are a schematic flowchart of an interface switching method according to an embodiment of this application;
FIG. 13 is a schematic flowchart of an interface switching method according to an embodiment of this application; and
FIG. 14 is a diagram of a structure of a terminal device according to an embodiment of this application.

### DESCRIPTION OF EMBODIMENTS

The following clearly describes technical solutions in embodiments of this application in detail with reference to accompanying drawings. In descriptions of embodiments of this application, unless otherwise specified, "/" indicates "or". For example, A/B may indicate A or B. In this specification, "and/or" is merely an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

Terms "first" and "second" below are merely intended for description, and shall not be understood as an indication or implication of relative importance or implicit indication of a quantity of indicated technical features. Therefore, a feature limited by "first" and "second" may explicitly or implicitly include one or more features. In the descriptions in embodiments of this application, unless otherwise stated, "a plurality of" means two or more.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language like Java or an extensible markup language (extensible markup language, XML). The interface source code is parsed and rendered on an electronic device, and finally presented as user-recognizable content. The user interface is usually represented in a form of a graphical user interface (graphical user interface, GUI), and is a user interface that is related to a computer operation and that is displayed in a graphic manner. The user interface may be a visual interface element like text, an icon, a button, a menu, a tab, a text box, a dialog box, a status bar, a navigation bar, or a widget that is displayed on a display of the electronic device. The user interface may also be referred to as an interface or a page.

One application includes a plurality of application windows. The application window may be an activity window in an Android system, an application window in an iOS system, or an application window in another operating system. This is not specifically limited herein. For ease of description, the application window in embodiments of this application may be briefly referred to as a window or an application window. In some embodiments, one application window corresponds to one user interface. In some embodiments, one application window may alternatively correspond to a plurality of user interfaces.

The following describes technical concepts in this application.

AOD: To improve user experience, a simple information service can also be provided for a user in a screen-off state of a terminal device 100 given that the terminal device 100 has an AOD function, and is provided with an AOD interface. The AOD interface is used to always display some important information on a screen with low power consumption. For example, general information such as time, a date, and a battery may be displayed, notification information such as an incoming call, a message, and a push message may be further displayed, and a service widget (for example, a taxi hailing widget or a navigation card) of a currently running application may be further displayed, so that the user can intuitively and quickly view required information. This reduces steps for users to operate the device and brings convenience. The AOD interface displaying the service widget may also be referred to as immersive lock screen AOD interface.

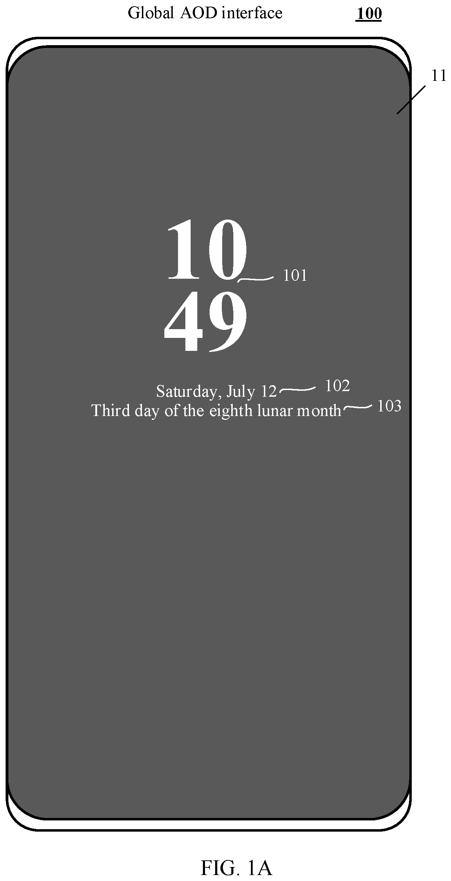

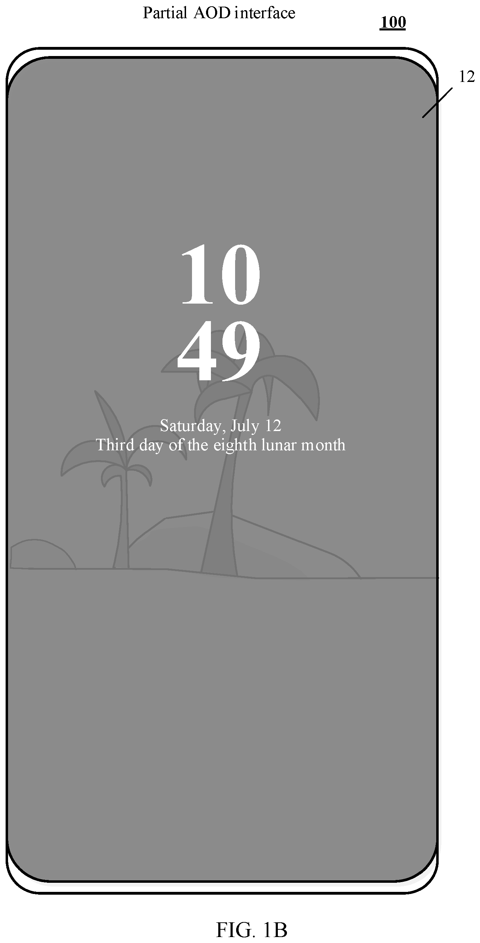

In some embodiments, the AOD may be classified into global AOD and partial AOD. In an implementation, refer to FIG. 1A. An AOD interface 11 of the global AOD controls a local area of the screen to be on, to always display some important information, and other areas of the screen remains off. The AOD interface 11 may include a clock component 101, a Gregorian calendar date 102, and a lunar calendar date 103. Refer to FIG. 1B. An AOD interface 12 of the partial AOD controls the screen to be partially highlighted, to always display some important information, and controls other areas on the screen to be displayed at low brightness, and the AOD interface may also display a wallpaper. In subsequent embodiments, the global AOD is mainly used as an example for description.

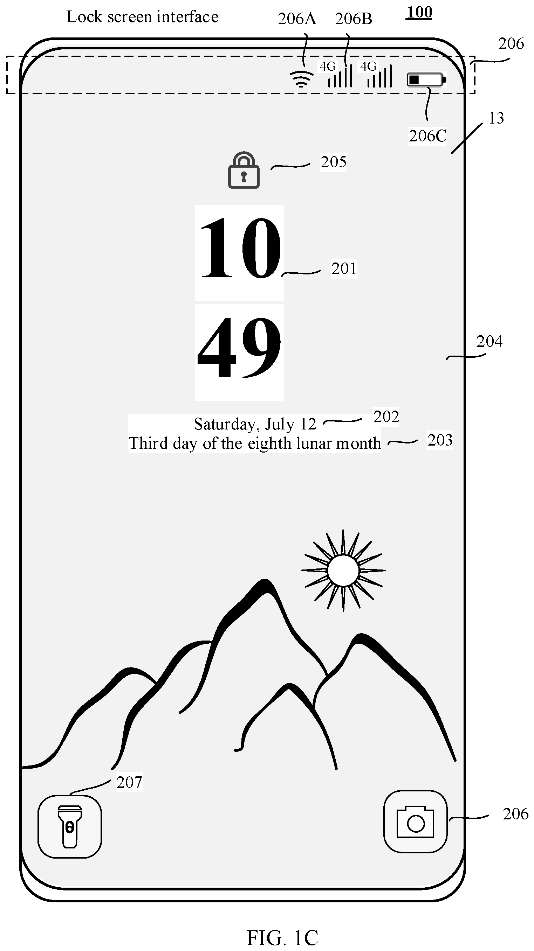

Screen lock: To protect personal information and privacy, avoid a misoperation, or save power, the terminal device 100 usually has a screen lock (namely, screen lock) function, and is provided with a lock screen interface. The lock screen interface may display general information such as time, a date, weather, and a battery, may further display notification information such as an incoming call, a message, and a push message, and may further display a service widget of a currently running application. A lock screen interface displaying only the general information may also be referred to as a normal lock screen interface; a lock screen interface displaying the notification message may also be referred to as a notification lock screen interface; and a lock screen interface displaying the service widget may also be referred to as an immersive lock screen interface. The user may manually control the terminal device 100 to lock the screen and enter the lock screen interface. Alternatively, when no operation is performed on the terminal device 100 within specified time, the terminal device 100 may automatically lock the screen to enter the lock screen interface. When the screen is locked, in addition to passively receiving a signal transmitted by another terminal, the terminal device 100 usually has only some interaction functions such as unlocking by the user, and the user can use more functions of the terminal device 100 only after the screen is unlocked. For example, the terminal device 100 displays a home screen after unlocking. For example, FIG. 1C is a diagram of a lock screen interface 13. The lock screen interface 13 may include a clock component 201, a Gregorian calendar date 202, a lunar calendar date 203, a lock screen wallpaper 204, a lock screen icon 205, and a status bar 206. The lock screen icon 205 indicates that the current interface is the lock screen interface, and the status bar 206 includes a signal strength indicator 206A of a wireless fidelity (wireless fidelity, Wi-Fi) signal, a signal strength indicator 206B of a mobile communication signal (which may also be referred to as a cellular signal), and a battery status indicator 206C. Optionally, the lock screen interface 13 may further include icons of common applications, for example, a camera icon 206 and a flashlight icon 207.

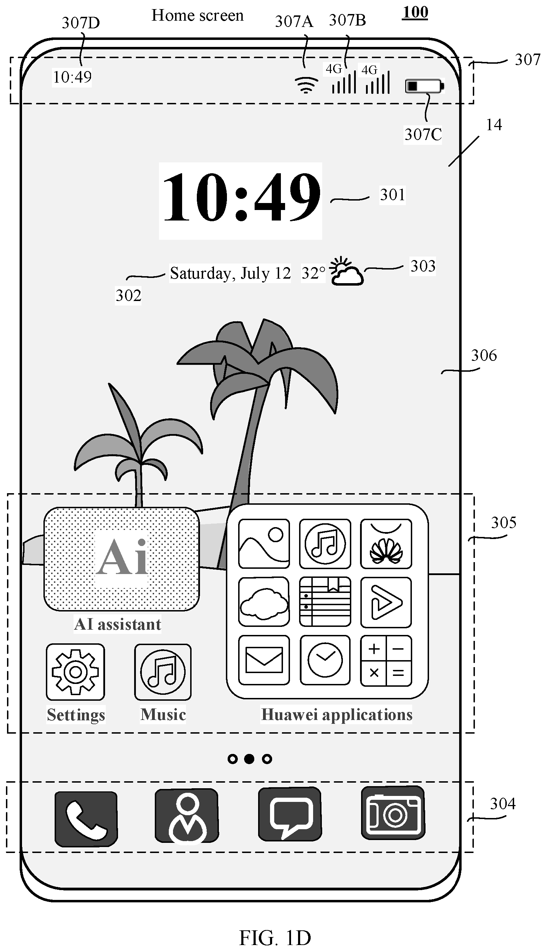

Home screen: The home screen may also be referred to as a main interface. The home screen (launcher) is usually used to display an application icon of each application, may further display general information such as a date, time, weather, and a battery, and may further display various common service widgets (for example, a weather widget, a subway widget, and an express widget). For example, FIG. 1D is a diagram of a home screen 14. The lock screen interface 13 includes a clock component 301, a Gregorian calendar date 302, a weather component 303, a tray 304 with common application icons, other application icons 305, a home screen wallpaper 306, and a status bar 307. The status bar 307 includes a signal strength indicator 307A of a Wi-Fi signal, a signal strength indicator 307B of a mobile communication signal, a battery status indicator 307C, and a time indicator 307D.

The home screen 14 shown in FIG. 1D displays a weather clock of a current location, and the weather clock may include one or more of the clock component, the Gregorian calendar date, and the weather component. In this embodiment of this application, the home screen 14 may further display a weather clock of another preset location, and the weather clock displaying two locations may also be referred to as weather dual clocks.

In some embodiments, the lock screen interface, the AOD interface, and the home screen interface are displayed in different application windows. For example, a lock screen window is used to display the lock screen interface, an AOD window is used to display the AOD interface, and a home screen window is used to display the main interface.

In some other embodiments, one or more of the lock screen interface, the AOD interface, and the home screen interface may be displayed in a same application window (for example, a home screen system window of a large home screen architecture). When the home screen system window includes a plurality of interfaces of the lock screen interface, the AOD interface, and the home screen interface, the plurality of interfaces may be superimposed and displayed in the home screen system window. In an implementation, the terminal device 100 sequentially superimposes and displays the AOD interface, the lock screen interface, and the home screen. When the terminal device 100 enters the AOD interface, an uppermost-layer interface displayed in the home screen system window is the AOD interface; when the terminal device 100 enters the lock screen interface, the AOD interface is hidden in the home screen system window, and a displayed uppermost-layer interface is the lock screen interface; and when the terminal device 100 enters the home screen, the AOD interface and the lock screen interface are hidden in the home screen system window, and a displayed uppermost-layer interface is the home screen.

Service widget: The service widget is a widget including atomic services, which is one of bearer forms of HarmonyOS atomic services. The service widget is a new form of displaying page content of an application, and the content of the application page can be placed on the service widget. The service widget can be added to the lock screen interface, the AOD interface, and the home screen, and the service widget supports fast execution through tapping, to implement direct service access and experience layer reduction.

Shared element: Shared elements are interface elements of a same type included in two interfaces before and after switching. Layout styles and display locations of the shared element in the two interfaces may be the same or may be different. The layout style may indicate a part or all of an arrangement manner, a color, transparency, a font, a shape, and a size of each component in the shared element. The display location may indicate a display location of the shared element on the screen. The shared element includes but is not limited to a clock component, a service widget, an application entry, a system tool, and the like. This is not specifically limited herein. The clock component is a digital component used to present time, is a common element in the lock screen interface and the AOD interface, and may also be added to the home screen. The clock component may have a plurality of template forms, and usually, the terminal device supports a user-defined template form of the clock component. In some embodiments, a layout style of a clock component in an interface (for example, the home screen) includes a template form used by the clock component in the interface and a size of the template form. The template form indicates a part or all of an arrangement manner, a color, transparency, a font, a shape, and a size of each component in the shared element.

In some embodiments, a part of interface elements displayed by the terminal device 100 can implement the transition animation effect, and a part of interface elements cannot implement the transition animation effect. If the two interfaces before and after switching include the interface elements of the same type (for example, the clock component), and the type of element can implement the transition animation effect, the interface element is the shared element of the two interfaces. Transition and sharing are described in detail in subsequent embodiments. Details are not described herein.

Non-shared element: The non-shared element is an element other than the shared element in the two interfaces before and after switching.

For example, shared elements of the lock screen interface 13 shown in FIG. 1C and the home screen 14 shown in FIG. 1D include the clock component, the Gregorian calendar date, the battery indicator, the signal indicator of the Wi-Fi signal, and the signal indicator of the mobile communication signal. In the two interfaces, layout styles and display locations of the clock components are both different, layout styles and display locations of the battery indicators and the signal indicators are both the same, and layout styles of the Gregorian calendar dates are the same but display locations are different. For example, shared elements of the AOD interface 11 shown in FIG. 1A and the home screen 14 shown in FIG. 1D include the clock component and the Gregorian calendar date. In the two interfaces, layout styles and display locations of the clock component are both different, and layout styles of the Gregorian calendar dates are the same but display locations are different. For example, shared elements of the AOD interface 11 shown in FIG. 1A and the lock screen interface 13 shown in FIG. 1C include the clock component, the Gregorian calendar date, and the lunar calendar date, and layout styles and display locations of the shared elements in the two interfaces are both the same.

It should be noted that FIG. 1A to FIG. 1D are merely interface diagrams according to an embodiment of this application. Display content of the AOD interface, the lock screen interface, and the home screen is not specifically limited in this embodiment of this application. For a shared element included in any two interfaces of the terminal device 100, both a layout style and a display location of the shared element are not specifically limited. For example, the layout style and the display location of the clock component in the AOD interface 11 shown in FIG. 1A may alternatively be different from those in the lock screen interface 13 shown in FIG. 1C. In this embodiment of this application, the two interfaces before and after switching may include one or more shared elements. In subsequent embodiments, a shared element 1 is mainly used as an example for description.

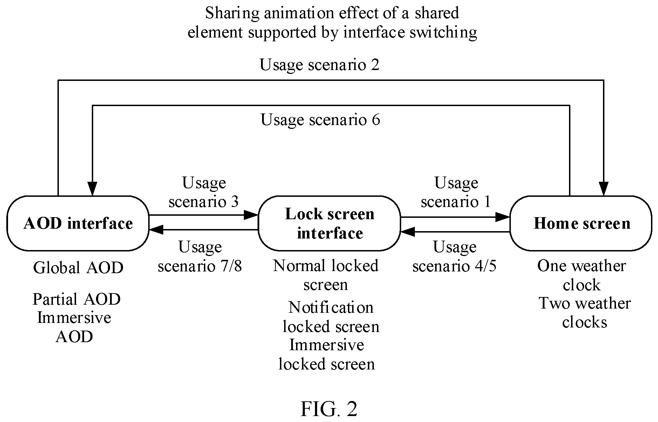

For example, FIG. 2 shows interface switching in some high-frequency scenarios (namely, usage scenarios 1 to 8 shown in FIG. 2) of the terminal device 100. As shown in FIG. 2, the high-frequency scenario includes: switching from the AOD interface/lock screen interface to the home screen, switching from the home screen to the AOD interface/lock screen interface, switching from the AOD interface to the lock screen interface, switching from the lock screen interface to the AOD interface.

Refer to the AOD interface, the lock screen interface, and the home screen shown in FIG. 1A to FIG. 1D. Interface switching is directly performed in the high-frequency scenario, that is, a current interface is stopped being displayed and a next interface is directly displayed. Switching effect is stiff and is not smooth enough. For example, a first interface is switched to a second interface. During interface switching, a non-shared element in the first interface suddenly disappears, and a non-shared element in the second interface suddenly appears. When layout styles and/or display locations of a shared element in the first interface and the second interface are different, the shared element changes abruptly during interface switching, visual effect is interrupted, and the shared element seems like two different elements. For example, the lock screen interface 13 shown in FIG. 1C is switched to the home screen 14 shown in FIG. 1D. During interface switching, a non-shared element (for example, the lunar calendar date 203) in the lock screen interface suddenly disappears, and a non-shared element (for example, the weather component 303) on the home screen is suddenly displayed. Both the lock screen interface 13 and the home screen 14 include clock components (namely, the clock component 201 and the clock component 203), but the layout styles and the display locations of the clock components in the two interfaces are both different. During interface switching, the clock component suddenly changes from the layout style and the display location shown in FIG. 1A to the layout style and the display location shown in FIG. 1D.

In an interface switching method provided in embodiments of this application, progressive interface switching animation effect displayed when interface switching (for example, interface switching between any two interfaces of the AOD interface, the home screen, and the lock screen interface) is performed between a first interface and a second interface can present seamless transition effect, thereby offering users smoother operation experience. The progressive interface switching animation effect includes one or more of the following:

Interface switching animation effect 1: Progressive transition animation effect can be implemented for shared elements (for example, shared elements 1) in two interfaces. To be specific, a layout style of the shared element 1 in the first interface is gradually deformed into a layout style of the shared element 1 in the second interface, a display location of the shared element 1 in the first interface is gradually moved to a display location of the shared element 1 in the second interface, and the shared elements 1 remain clear, that is, a blurring degree/clarity remains unchanged. In subsequent embodiments, the blurring degree is used as an example for description.

Interface switching animation effect 2: Progressive fade-out exit animation effect (namely, fade-out animation effect) is implemented for a non-shared element in the first interface. The fade-out animation effect includes: A blurring degree of the non-shared element in the first interface gradually increases, and the non-shared element gradually becomes blurred visually until the non-shared element completely disappears.

Interface switching animation effect 3: Progressive fade-in entry animation effect (namely, fade-in animation effect) is implemented for a non-shared element in the second interface. The fade-in animation effect of the non-shared element in the second interface includes: The non-shared element in the second interface is displayed at a low blurring degree at the beginning, the blurring degree gradually decreases, and the non-shared element gradually becomes clear visually until the non-shared element is completely displayed. An initial blurring degree of the non-shared element in the fade-in animation effect is not specifically limited in embodiments of this application, and may be set based on an actual requirement. This is not specifically limited herein.

In some embodiments, the display location may be a central location of the shared element 1. The display location is not limited to the central location. The display location may alternatively be another location at which the shared element 1 is displayed. This is not specifically limited herein.

In some embodiments, if the layout styles of the shared elements 1 in the first interface and the second interface are the same but the display locations are different, the shared elements 1 do not need to be deformed in an interface switching process, provided that the display location is moved and the shared elements 1 remain clear. If the layout styles of the shared elements 1 in the first interface and the second interface are different but the display locations are the same, the display location of the shared elements 1 does not need to be moved in the interface switching process, provided that the shared elements 1 are deformed and remain clear. If the layout styles and the display locations of the shared elements 1 in the first interface and the second interface are both the same, the shared elements 1 do not need to be deformed and moved in the interface switching process, and the shared elements 1 remain clear. In this case, although the shared elements 1 present transition animation effect, the shared elements 1 remain unchanged visually. In some embodiments, in the first interface and the second interface, the layout styles and the display locations of the shared elements 1 are both the same. During interface switching, there is no need to control shared elements 1 to present the transition animation effect. In some embodiments, in the first interface and the second interface, the layout styles and the display locations of the shared elements 1 are both the same, and the shared elements 1 may be classified as non-shared elements. During interface switching, the shared element 1 in the first interface presents the fade-out animation effect, and the shared element 1 in the second interface presents the fade-in animation effect.

In embodiments of this application, the progressive transition animation effect of the shared elements 1 makes it seem that a same element is changing visually in the interface switching process, instead of switching between two independent shared elements 1 in the two interfaces, to implement complete sharing in the visual effect. Therefore, the transition animation effect of the shared elements 1 may also be referred to as shared animation effect.

The following specifically describes usage scenarios in embodiments of this application.

Refer to FIG. 2. The usage scenario of the interface switching method provided in this application may be the interface switching scenario (for example, the following usage scenarios 1 to 8) of any two of the AOD interface, the lock screen interface, and the home screen, or may be an interface switching scenario of other interfaces. The first interface and the second interface are not specifically limited in embodiments of this application.

In the usage scenario 1, in response to a detected user operation 1, the terminal device 100 switches the lock screen interface to the home screen. The user operation 1 is not specifically limited in embodiments of this application.

In some embodiments, the terminal device 100 does not set unlock verification information, and the unlock verification information is used for unlocking. The user operation 1 may include a sliding operation (for example, an operation of sliding upward from the bottom of the screen) of sliding at a preset location of the screen in a preset direction. In other words, the user may directly unlock the screen through the sliding operation. For ease of description, a subsequent sliding operation used for unlocking may also be referred to as a slide-to-unlock operation.

In some embodiments, the user enters the unlock verification information into the terminal device 100 in advance, and the user operation 1 is used to unlock the screen based on correct unlock verification information. When determining that unlock verification information entered by the user operation 1 is correct, the terminal device 100 switches the lock screen interface to the home screen. For example, the unlock verification information is facial information, and the user operation 1 may include a face unlock operation. For example, the unlock verification information is a password, and the user operation 1 may include a password unlock operation. For example, the unlock verification information is a fingerprint, and the user operation 1 may include a fingerprint unlock operation. Implementations of the face unlock operation, the password unlock operation, and the fingerprint unlock operation are not specifically limited in embodiments of this application.

In some embodiments, the user enters unlock verification information into the terminal device 100 in advance. The user operation 1 includes one of the face unlock, the password unlock, and the fingerprint unlock, and the sliding operation. To be specific, after the user unlocks the screen based on the unlock verification information in the lock screen interface, the user needs to perform the sliding operation to enter the home screen.

In the usage scenario 2, in response to a detected user operation 2, the terminal device 100 switches the AOD interface to the home screen. The user operation 2 is not specifically limited in embodiments of this application.

In some embodiments, the terminal device 100 does not set unlock verification information. Optionally, the terminal device 100 includes a power (power) button, and the user operation 2 may include tapping the power button. Optionally, the AOD interface displays a shortcut icon of an application, and the user operation 2 may include an operation performed on the shortcut icon. Optionally, the user operation 2 may include a sliding operation (for example, an operation of sliding upward from the bottom of the screen) of sliding at a preset location of the screen in a preset direction. In other words, the screen can be directly unlocked through the sliding operation.

In some embodiments, the user enters the unlock verification information into the terminal device 100 in advance, and the user operation 2 is used to unlock the screen based on correct unlock verification information. For example, the unlock verification information is facial information, and the user operation 2 may include a face unlock operation.

In the usage scenario 3, in response to a detected user operation 3, the terminal device 100 switches the AOD interface to the lock screen interface. The user operation 3 is not specifically limited in embodiments of this application.

In some embodiments, the terminal device 100 includes a power button, and the user operation 3 may include tapping the power button. In some embodiments, the AOD interface displays a shortcut icon of an application, and the user operation 3 may include an operation performed on the shortcut icon.

In the usage scenario 4, in response to a detected user operation 4, the terminal device 100 switches the home screen to the lock screen interface. The user operation 4 is not specifically limited in embodiments of this application.

In some embodiments, a physical button (for example, a power button) used to lock the screen is disposed on the home screen of the terminal device 100, and the user operation 4 may include tapping the physical button. In some embodiments, a shortcut control used to lock the screen is set on the home screen of the terminal device 100, and the user operation 4 may include an operation performed on the shortcut control.

In the usage scenario 5, when detecting that the terminal device meets a preset condition 1 (for example, the user does not perform any operation on the terminal device 100 within preset duration), the terminal device 100 automatically switches the home screen to the lock screen interface. The user and/or the terminal device 100 may set the preset duration.

In the usage scenario 6, in response to a detected user operation 5, the terminal device 100 switches the home screen to the AOD interface. The user operation 5 is not specifically limited in embodiments of this application. In some embodiments, the terminal device 100 includes a power button, and the user operation 5 may include tapping the power button.

In the usage scenario 7, in response to a detected user operation 6, the terminal device 100 switches the lock screen interface to the AOD interface. The user operation 6 is not specifically limited in embodiments of this application. In some embodiments, the terminal device 100 includes a power button, and the user operation 6 may include tapping the power button.

In the usage scenario 8, when displaying the lock screen interface, and when detecting that the terminal device meets a preset condition 2 (for example, the user does not perform any operation on the terminal device 100 within specified time), the terminal device 100 automatically switches the lock screen interface to the AOD interface. The user and/or the terminal device 100 may set the specified time. The preset condition 2 is not specifically limited in embodiments of this application.

In some usage scenarios (for example, the usage scenarios 1 and 2), the user performs interface switching through the preset slide-to-unlock operation. In a process in which the user performs the slide-to-unlock operation, as a finger of the user moves, the terminal device 100 controls the first interface to be progressively switched to the second interface. Specifically, in an implementation, in the interface switching process, as the finger of the user moves, the shared element 1 in the first interface presents the transition animation effect (that is, the shared element 1 in the first interface is gradually deformed and/or moved toward the shared element 1 in the second interface). In addition, the non-shared element in the first interface presents the fade-out animation effect until the non-shared element disappears. When progress of the transition animation effect of the shared element 1/progress of the fade-out animation effect of the non-shared element reaches a first value (for example, 0%, 90%, or 100%), the non-shared element in the second interface starts to present the fade-in animation effect until the non-shared element is completely displayed.

It should be noted that the slide-to-unlock operation may be a slide operation of the finger, or may be a slide operation implemented on the screen by using another auxiliary device (for example, a stylus). This is not specifically limited herein. In subsequent embodiments, an example in which the slide-to-unlock operation is performed by the finger is used for description.

The following uses the usage scenario 1 as an example to describe, in interface embodiments 1 to 4, an example of interface switching animation effect presented when interface switching is performed through the slide-to-unlock operation.

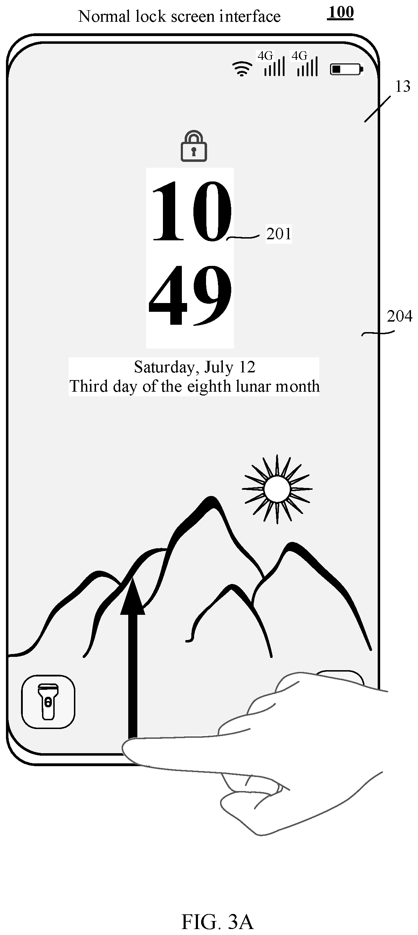

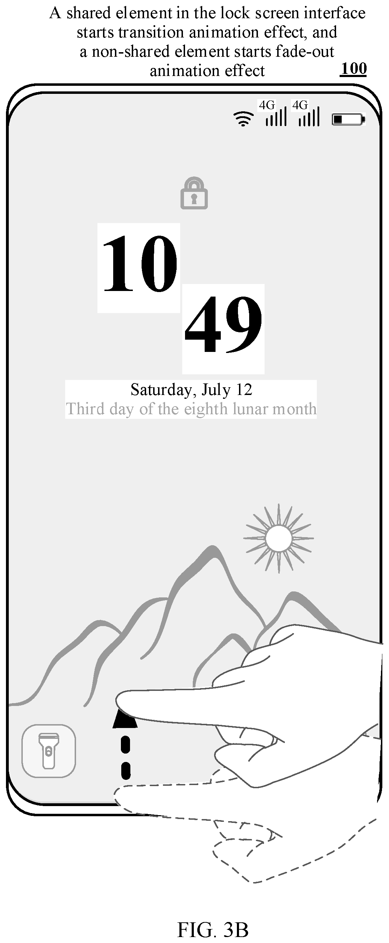

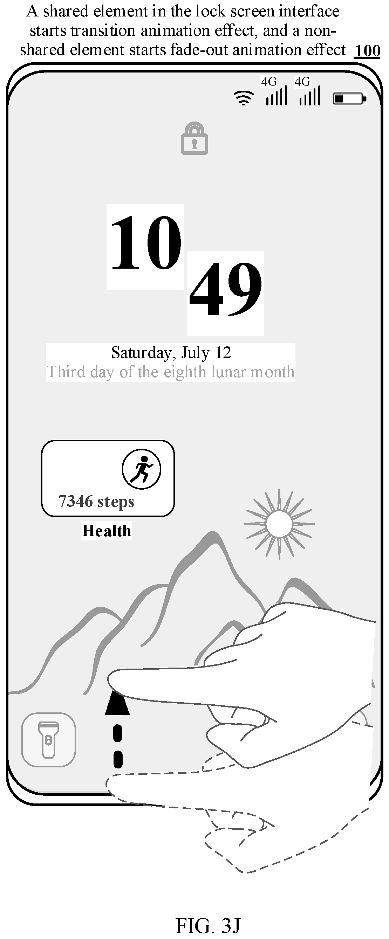

Interface embodiment 1: For example, FIG. 3A to FIG. 3F are user interface diagrams for switching a normal lock screen interface to a home screen.

In some embodiments, as shown in FIG. 3A to FIG. 3C, a shared element of a lock screen interface 13 and a home screen 14 includes a clock component. When displaying the lock screen interface 13, a terminal device 100 detects that a user starts to perform a slide-to-unlock operation performed on the lock screen interface 13 (for example, a sliding operation of sliding upward from the bottom of a screen), and the slide-to-unlock operation is used to switch the lock screen interface 13 to the home screen 14. In response to the slide-to-unlock operation that starts to be performed, with sliding of a finger of the user, the terminal device 100 controls a shared element 1 (for example, a clock component 201) in the lock screen interface 13 to present transition animation effect, and a non-shared element (for example, a lock screen wallpaper 204) in the lock screen interface 13 to present fade-out animation effect. For example, in visual effect, with sliding of the finger of the user, the clock component 201 in the lock screen interface 13 is deformed toward a layout style of the clock component 301 in the home screen 14, and is moved toward a display location of the clock component 301. In addition, the lock screen wallpaper 204 gradually becomes blurred.

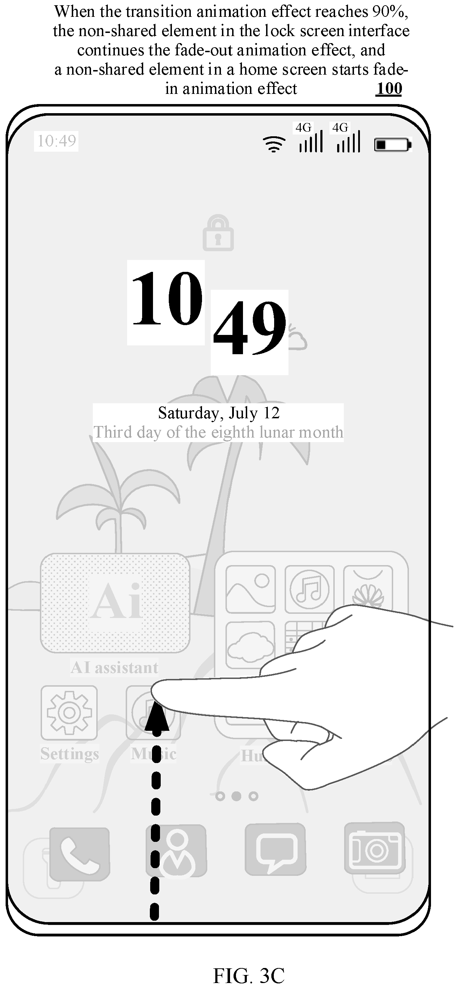

In some embodiments, as shown in FIG. 3C, when detecting that progress of the transition animation effect of the shared element 1/progress of the fade-out animation effect of the non-shared element reaches a first value (for example, 90%), the terminal device 100 controls a non-shared element (for example, a home screen wallpaper 306) in the home screen 14 to start to present fade-in animation effect. In an implementation, when the non-shared element in the home screen 14 presents the fade-in animation effect, the non-shared element in the home screen 14 is superimposed and displayed on the non-shared element in the lock screen interface 13. For example, in the visual effect, when the progress of the transition animation effect of the clock component 201 reaches 90%, the blurred home screen wallpaper 306 starts to be displayed, and the home screen wallpaper 306 gradually becomes clear until the home screen wallpaper 306 is completely displayed. In this embodiment of this application, a value of the first value is not specifically limited, and may be set based on an actual requirement.

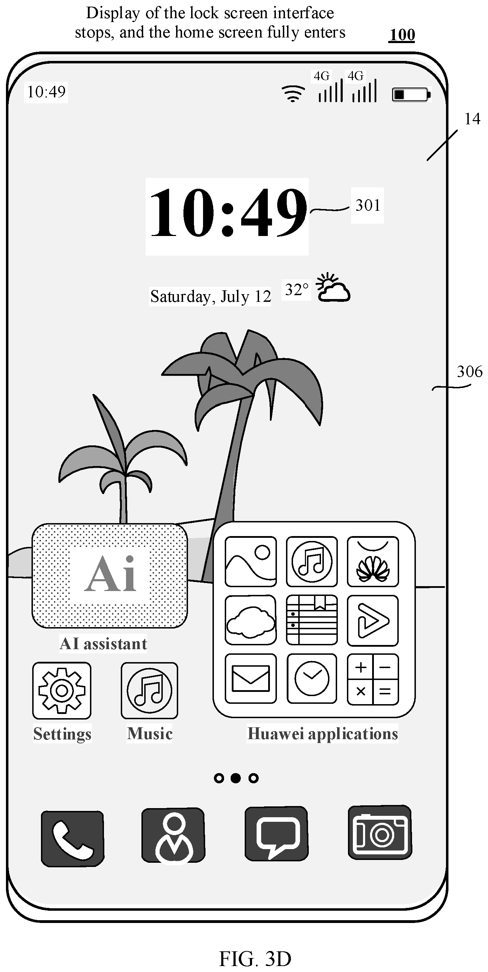

In some embodiments, as shown in FIG. 3C and FIG. 3D, when detecting that when the user ends (that is, completes) the slide-to-unlock operation, the transition animation effect of the shared element 1 and the fade-in animation effect of the non-shared element in the second interface are not completed, the terminal device 100 controls the shared element 1 to continue the transition animation effect, and controls the non-shared element in the second interface to continue the fade-in animation effect until the transition animation effect and the fade-in animation effect end (that is, the progress reaches 100%). End time of the transition animation effect and end time of the fade-in animation effect may be the same. For example, after the finger of the user stops sliding and touching the display, the clock component 201 in the lock screen interface 13 continues to deform and move toward the clock component 301 in the home screen 14, and the home screen wallpaper 306 in the home screen 14 continues to become clear until the home screen wallpaper 306 is completely displayed. In some embodiments, the terminal device 100 may control a change speed of the transition animation effect (for example, gradually reduce the change speed of the transition animation effect), so that the transition animation effect of the clock component is not completed when the user ends the slide-to-unlock operation.

In some embodiments, the blurring degree may be understood as transparency. The terminal device 100 controls, by increasing transparency of the non-shared element, the non-shared element to become blurred, and controls, by reducing transparency of the non-shared element, the non-shared element to become clear. When the transparency is 100%, the non-shared element in the visual effect stops being displayed. When the transparency is 0%, the non-shared element in the visual effect is completely displayed. The non-shared element is controlled to become blurred/clear by adjusting the transparency. In addition to this, the non-shared element may alternatively be controlled to become blurred/clear in another manner. This is not specifically limited herein.

In some embodiments, in response to the slide-to-unlock operation that starts to be performed, with sliding of the finger of the user, the non-shared element in the home screen 14 starts to present the fade-in animation effect. In the visual effect, after the user starts the slide-to-unlock operation, the non-shared element that is blurred in the home screen 14 starts to be displayed and gradually becomes clear. In some embodiments, the non-shared element in the home screen 14 starts to present the fade-in animation effect only when the user receives the slide-to-unlock operation. In the visual effect, the home screen wallpaper 306 that is blurred in the home screen 14 starts to be displayed only when the clock component 201 in the lock screen interface 13 is deformed and moved to the clock component 301 in the home screen 14. In some embodiments, the non-shared element in the home screen 14 starts to present the fade-in animation effect only when the transition animation effect of the shared element 1 is completed (that is, deformation and movement end). In the visual effect, the home screen wallpaper 306 that is blurred in the home screen 14 starts to be displayed only when the clock component 201 in the lock screen interface 13 is deformed and moved to the clock component 301 in the home screen 14.

In some embodiments, the progress of the transition animation effect of the shared element 1 and/or the progress of the fade-out animation effect of the non-shared element are/is positively correlated with a sliding speed of the finger of the user. In an implementation, faster sliding of the finger of the user indicates a greater change of the progress of the transition animation effect (that is, a faster deformation and movement speed of the shared element 1), and/or a greater change of the progress of the fade-out animation effect (that is, a faster blurring speed of the non-shared element). In this way, smooth experience of a synchronous change with the hand is provided for the user. In an implementation, sliding time of the finger of the user is long, and before the user stops the slide-to-unlock operation, the transition animation effect of the shared element 1 may be completed.

In some embodiments, the progress of the transition animation effect of the shared element 1 and/or the progress of the fade-out animation effect of the non-shared element are/is positively correlated with a sliding distance of the finger of the user. The transition animation effect is used as an example. In an implementation, when it is detected that a sliding distance of the finger of the user in a specified direction (for example, upward) reaches a preset value 1 (for example, 3 cm), the transition animation effect of the shared element 1 is completed. It may be understood that, if the sliding distance is greater than the preset value 1 when the user stops the slide-to-unlock operation, the transition animation effect of the shared element 1 is completed. If the sliding distance is less than the preset value 1 when the user stops the slide-to-unlock operation, the transition animation effect of the shared element 1 is not completed, and the terminal device 100 continues the transition animation effect of the shared element 1 after the user stops the slide-to-unlock operation.

In some embodiments, end time of the transition animation effect and end time of the fade-out animation effect may alternatively be different. The transition animation effect may end earlier than the fade-out animation effect, or may end later than the fade-out animation effect. This is not specifically limited herein.

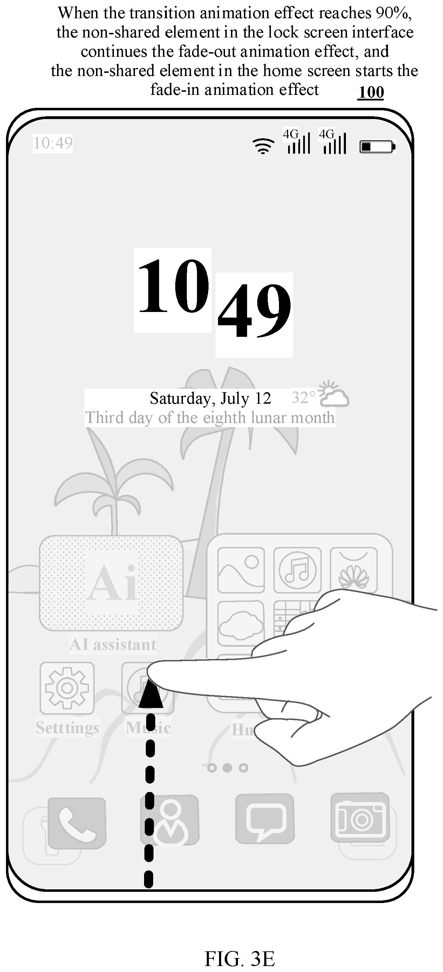

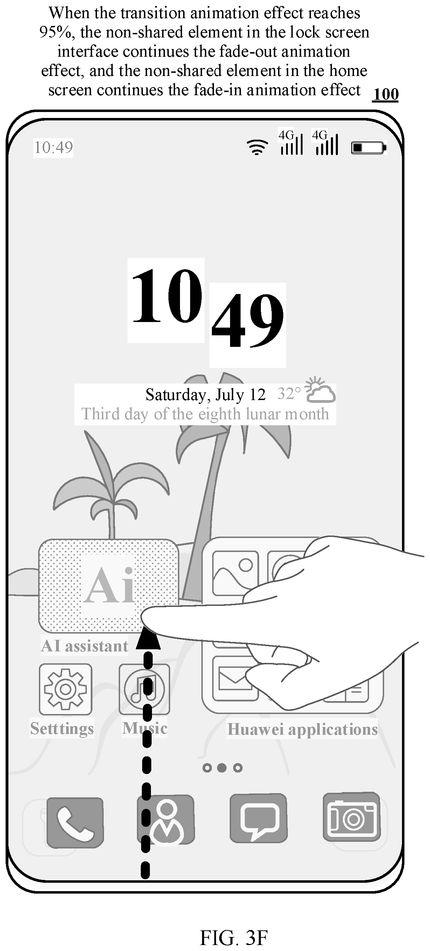

FIG. 3E and FIG. 3F show an implementation of the fade-in animation effect of the non-shared element in the home screen 14. That the non-shared element in the home screen 14 presents the fade-in animation effect includes: When the fade-in animation effect of the non-shared element starts to be presented, all non-shared elements in the home screen 14 are displayed with a high blurring degree; then, the blurring degree of all the non-shared elements gradually decreases, and the non-shared elements are clearer visually until the non-shared elements are completely displayed, that is, a target blurring degree of the non-shared elements in the home screen 14 is reached.

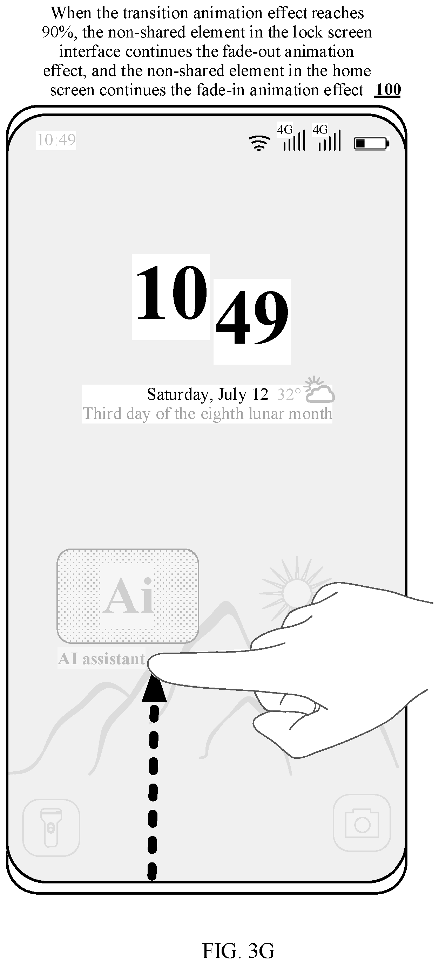

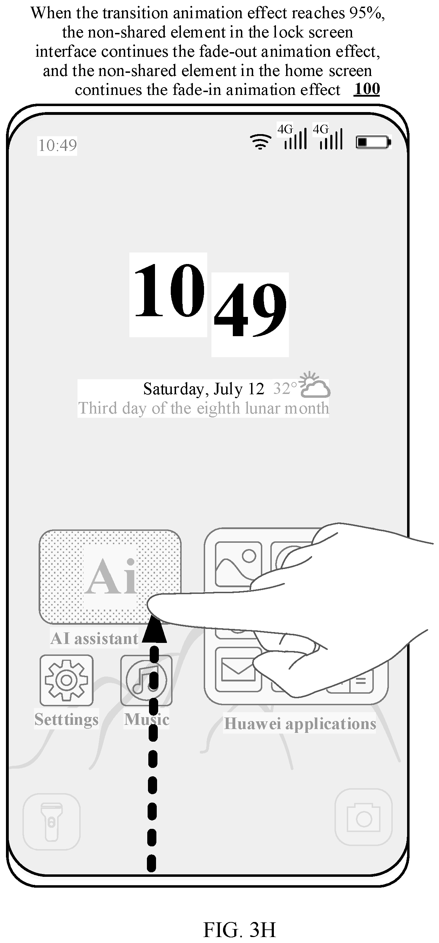

FIG. 3G and FIG. 3H show another implementation of the fade-in animation effect of the non-shared element in the home screen 14. That the non-shared element in the home screen 14 presents the fade-in animation effect includes: When the fade-in animation effect of the non-shared element starts to be presented, a part of the non-shared elements in the home screen 14 is first displayed in a preset sequence, and then displayed non-shared elements in the home screen 14 are sequentially added in the preset sequence until all the non-shared elements in the home screen 14 are displayed. In addition, when the fade-in animation effect of the non-shared element starts to be presented, the non-shared elements in the home screen 14 are displayed at a high blurring degree, then, the blurring degree of the displayed non-shared elements in the home screen 14 gradually decreases, and the non-shared elements in the home screen 14 are clearer visually until the non-shared elements are completely displayed. For example, as shown in FIG. 3G and FIG. 3H, a time indicator, an AI assistant icon, and a weather component in the home screen 14 are first displayed, and then a common icon set of Huawei applications, a settings icon, and a music icon are displayed. In the fade-in animation effect process, non-shared elements that are in the home screen 14 and that are simultaneously displayed have a same blurring degree.

It should be noted that, if the interface element displayed in the home screen 14 has entry animation effect (for example, rotational entry animation effect or entry animation effect featuring left lateral movement), the fade-in animation effect is implemented while the entry animation effect is presented.

Similarly, in an implementation of the fade-out animation effect of the non-shared element in the lock screen interface 13, all non-shared elements in the lock screen interface 13 are gradually blurred until the non-shared elements synchronously disappear. In another implementation of the fade-out animation effect of the non-shared elements in the lock screen interface 13, the non-shared elements in the lock screen interface 13 gradually disappear in a preset sequence, and the non-shared elements that are still being displayed are gradually blurred until all the non-shared elements disappear.

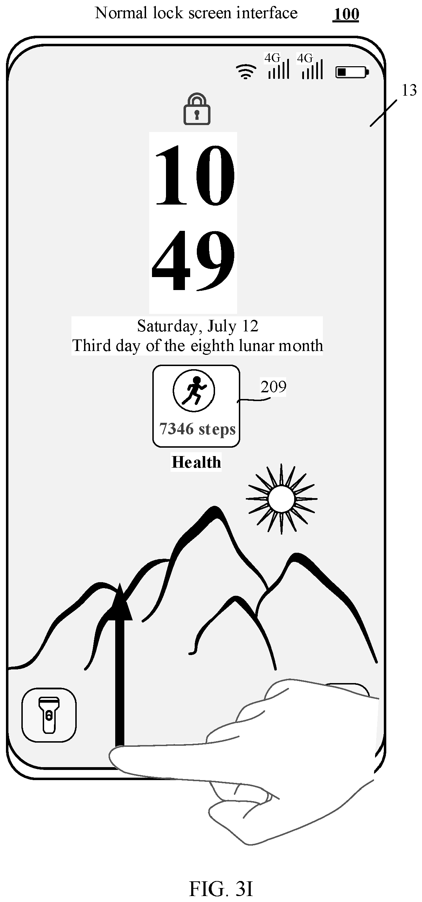

For example, the shared element 1 is a sports component. FIG. 3I to FIG. 3L are other interface diagrams of the transition animation effect.

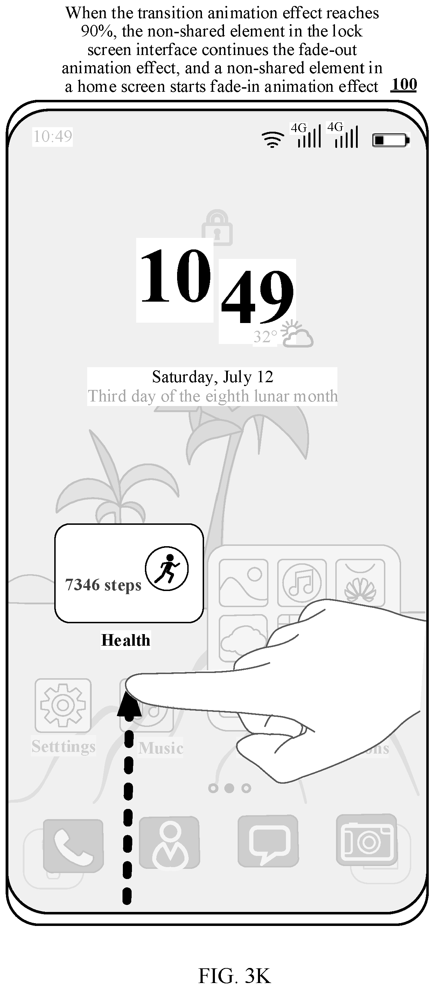

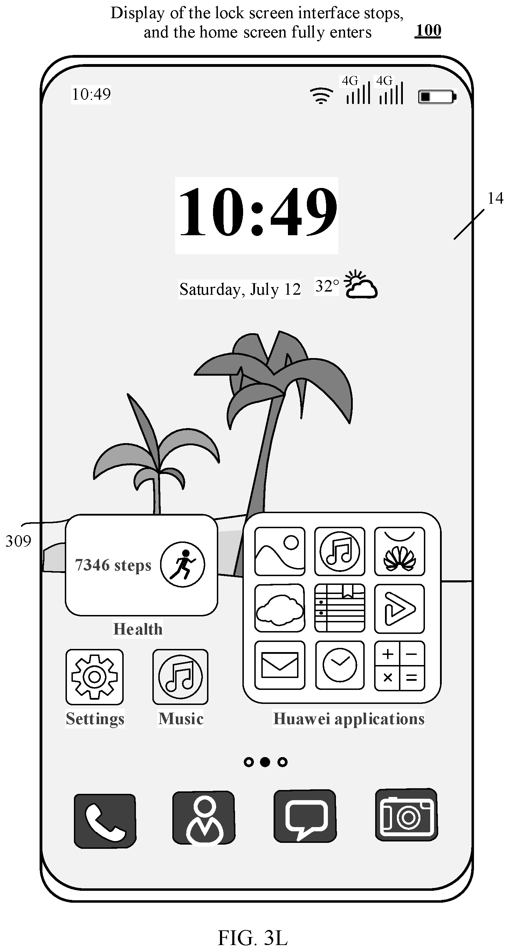

As shown in FIG. 3I to FIG. 3L, the lock screen interface 13 further includes a sports component 209, and the home screen 14 further includes a sports component 309. As shown in FIG. 3I to FIG. 3L, when detecting that the user starts to perform a slide-to-unlock operation, with sliding of the finger of the user, the terminal device 100 controls the sports component 209 in the lock screen interface 13 to deform toward a layout style of the sports component 309 in the home screen 14 and move toward a display location of the sports component 309, and controls a non-shared element in the lock screen interface 13 to be gradually blurred. As shown in FIG. 3K and FIG. 3L, when it is detected that progress of the transition animation effect of the sports component 209 reaches 90%, the non-shared element in the home screen 14 starts to be displayed and gradually becomes clear. For details, refer to the related descriptions in FIG. 3A to FIG. 3D. Details are not described herein again.

In some embodiments, components of elements of a same type in two interfaces on which switching is performed are completely the same. For example, in FIG. 3A to FIG. 3D, although the layout styles and the display locations of the clock components in the lock screen interface 13 and the home screen 14 are different, components are the same. In FIG. 3I to FIG. 3L, the sports components in the lock screen interface 13 and the home screen 14 have different layout styles and display locations, but have same components.

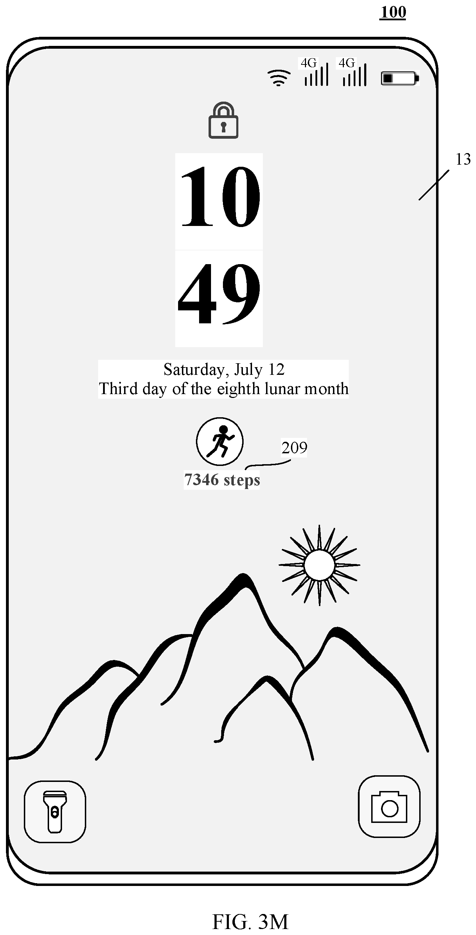

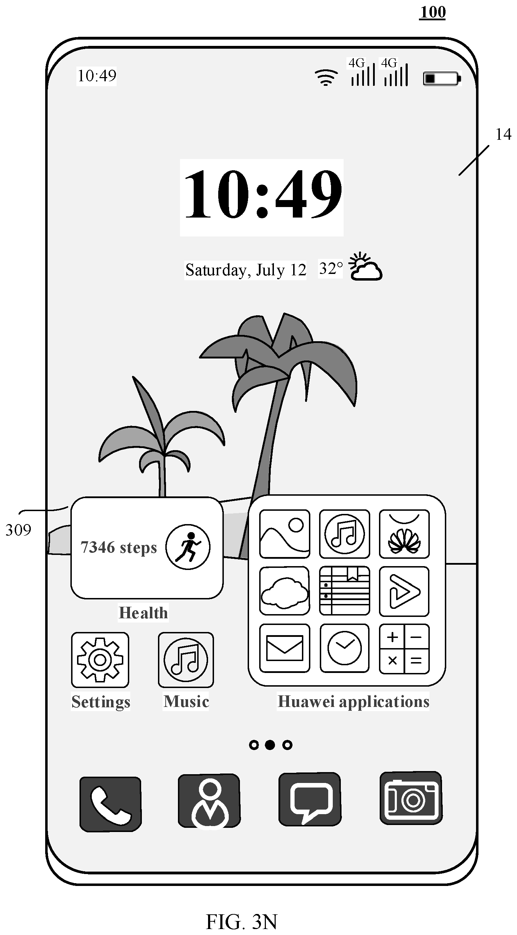

In some embodiments, in two interfaces on which switching is performed, components of elements of a same type may be different. For example, compared with the sports component 209 in the lock screen interface 13 shown in FIG. 3M, a component 1 (namely, a rounded rectangular background box and an application name "Health") is added to the sports component 309 in the home screen 14 shown in FIG. 3N, and a component 2 (namely, a circular background box) is reduced.

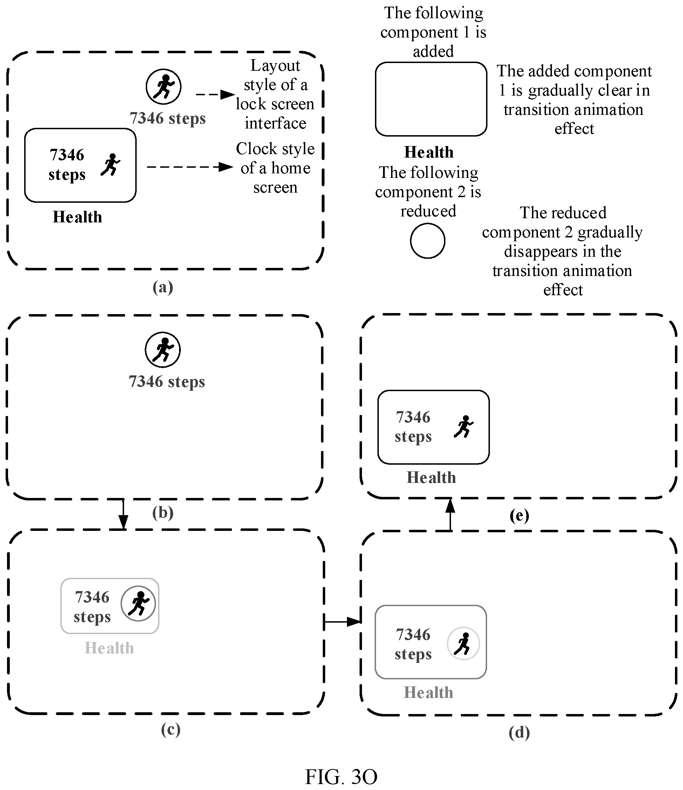

In an implementation, the sports components in the lock screen interface 13 and the home screen 14 are the shared element of the two interfaces, and (a) to (e) in FIG. 3O briefly show the transition animation effect of the sports component 209 in an interface switching process. As shown in the figure, in the transition animation effect of the sports component 209, the sports component 209 is deformed and moved toward the sports component 309. In addition, with the transition animation effect, the component 1 added to the sports component 209 presents the fade-in animation effect, that is, the added component 1 is displayed with a high blurring degree and gradually becomes clear, and the component 2 reduced from the sports component 209 presents the fade-out animation effect, that is, the reduced component 2 is gradually blurred until the component 2 disappears.

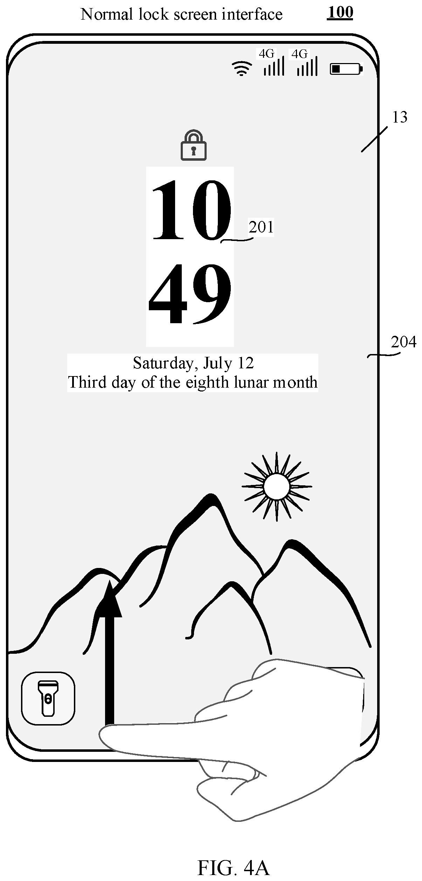

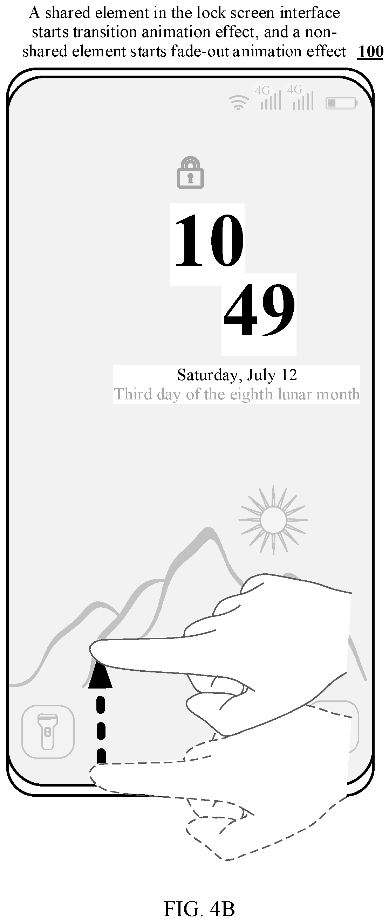

Interface embodiment 2: For example, FIG. 4A to FIG. 4D are user interface diagrams for switching a normal lock screen interface to a home screen with two weather clocks.

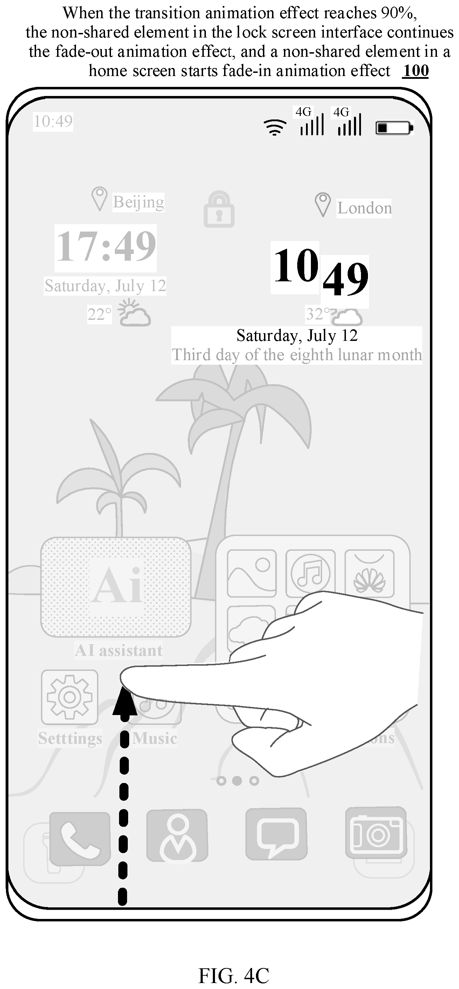

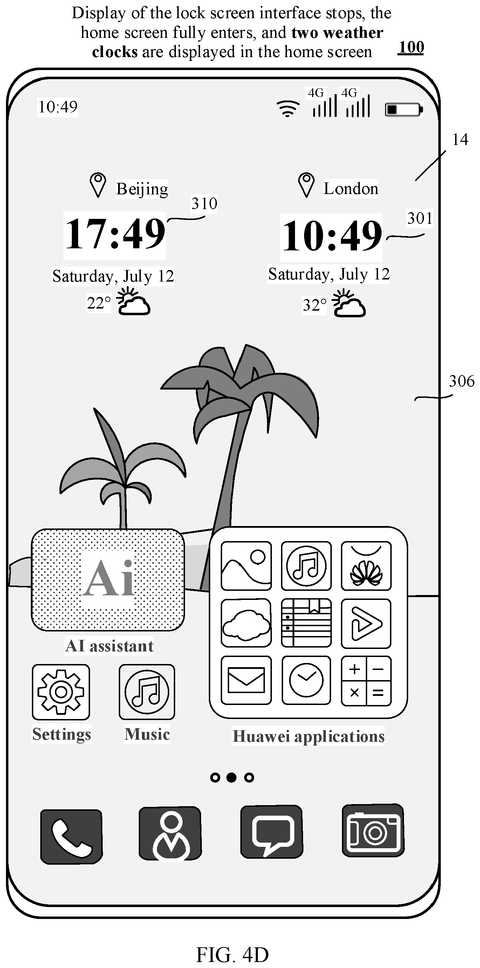

As shown in FIG. 4A, the lock screen interface 13 includes a clock component 201 corresponding to a local time zone. As shown in FIG. 4D, the home screen 14 may include a local (for example, London) weather clock, and the weather clock includes a clock component 301 corresponding to the local time zone. A weather clock of another preset location is included, and the weather clock includes a clock component 310 corresponding to a time zone in which the another preset location is located. The clock component 201 and the clock component 301 corresponding to the local time zones in the two interfaces are shared elements (namely, clock components) of each other. As shown in FIG. 4A to FIG. 4D, a terminal device 100 displays the lock screen interface 13. When detecting that a user starts to perform a slide-to-unlock operation, with sliding of a finger of the user, the terminal device 100 controls a shared element 1 (for example, the clock component 201) in the lock screen interface 13 to present transition animation effect, and controls a non-shared element in the lock screen interface 13 to present fade-out animation effect. For example, the clock component 201 in the lock screen interface 13 is controlled to deform and move toward the clock component 301 in the home screen 14, and a lock screen wallpaper 204 in the lock screen interface 13 is controlled to be gradually blurred. As shown in FIG. 4C and FIG. 4D, when it is detected that progress of the transition animation effect of the clock component 201 reaches 90%, a non-shared element in the home screen 14 starts to present fade-in animation effect. For example, a home screen wallpaper 306 in the home screen 14 is controlled to start to be displayed and is gradually clear.

For specific implementation of the interface embodiment 2 (for example, specific implementation of the transition animation effect, the fade-out animation effect, and the fade-in animation effect), refer to the related descriptions of the interface embodiment 1. Details are not described herein again.

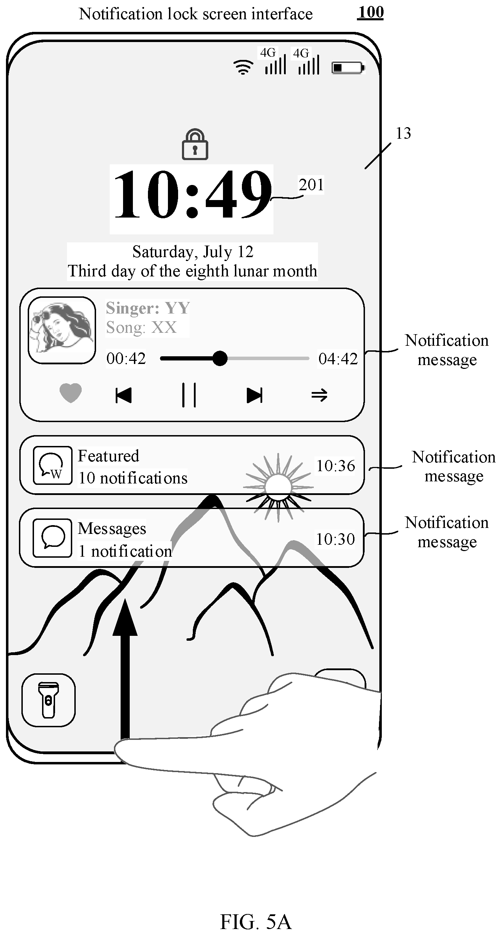

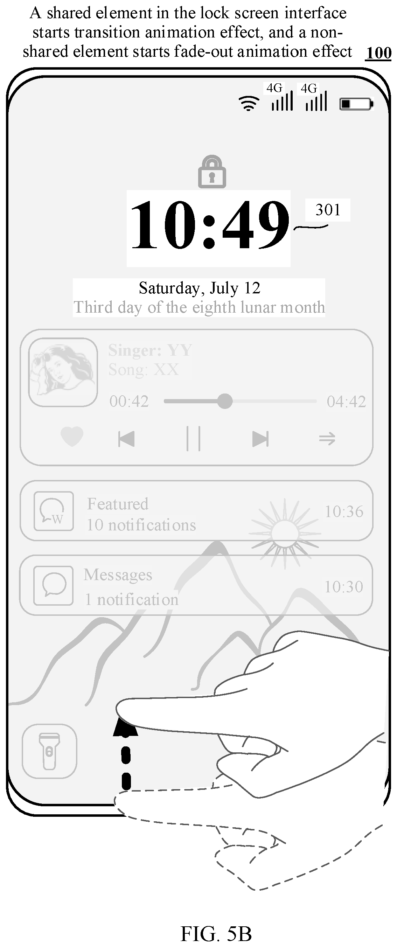

Interface embodiment 3: For example, FIG. 5A to FIG. 5D are user interface diagrams for switching a notification lock screen interface to a home screen.

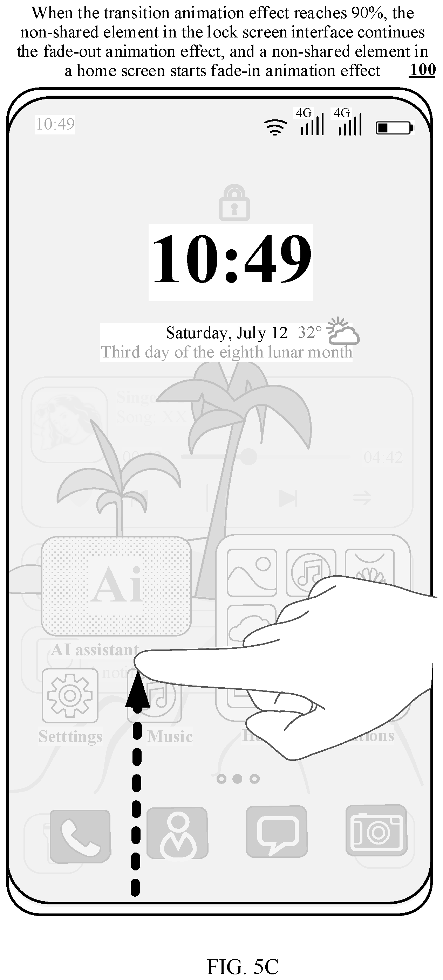

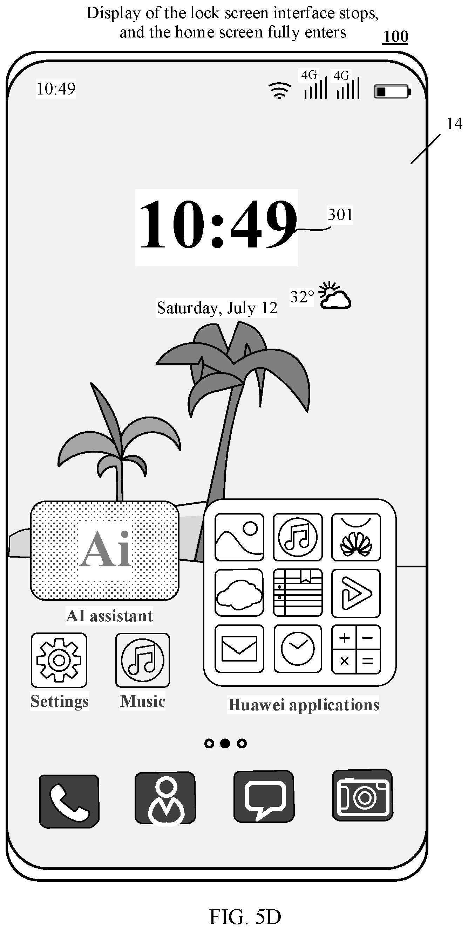

As shown in FIG. 5A and FIG. 5D, the lock screen interface 13 may further include one or more notification messages, the home screen 14 does not include a notification message, and the one or more notification messages are non-shared elements in the lock screen interface 13. A clock component 201 in the lock screen interface 13 and a clock component 301 in the home screen 14 have a same layout style and display location. As shown in FIG. 5A to FIG. 5C, a terminal device 100 displays the lock screen interface 13. When detecting that a user starts to perform a slide-to-unlock operation, with sliding of a finger of the user, the terminal device 100 controls a shared element 1 in the lock screen interface 13 to present transition animation effect, and controls the non-shared element (for example, the one or more notification messages) in the lock screen interface 13 to present fade-out animation effect, that is, the non-shared element is gradually blurred until the non-shared element disappears. As shown in FIG. 5C and FIG. 5D, when it is detected that progress of the fade-out animation effect of the one or more notification messages reaches 90%, a non-shared element in the home screen 14 starts to present fade-in animation effect.

It may be understood that, because the layout styles and the display locations of the clock components in the lock screen interface 13 and the home screen 14 are both the same, in an interface switching process, the clock component displayed on the terminal device 100 always remains unchanged in visual effect.

Specifically, for specific implementation of the interface embodiment 3 (for example, specific implementation of the transition animation effect, the fade-out animation effect, and the fade-in animation effect), further refer to the related descriptions of the interface embodiment 1. Details are not described herein again.

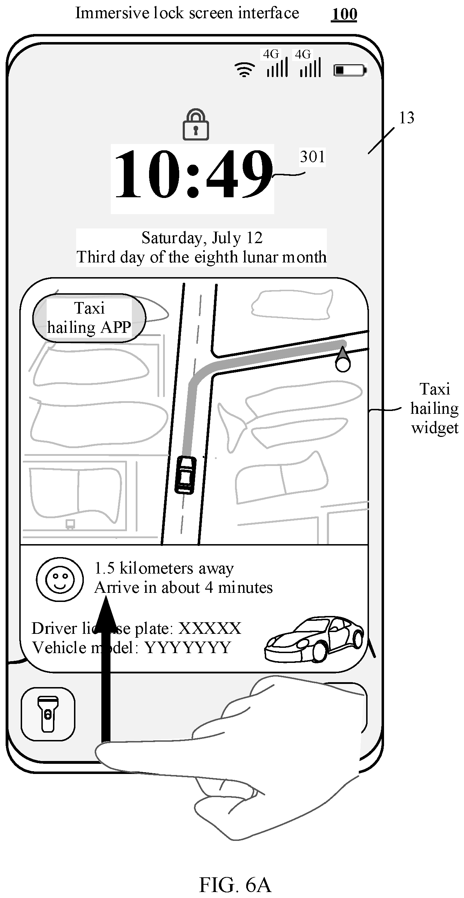

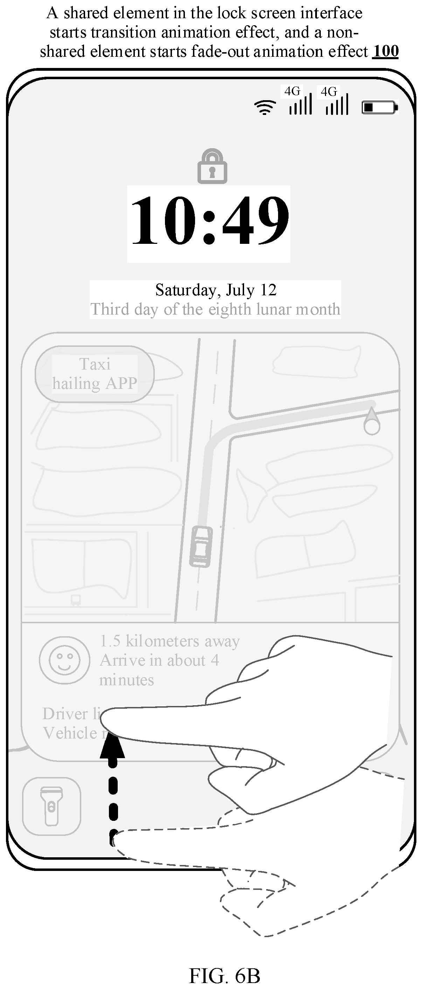

Interface embodiment 4: For example, FIG. 6A to FIG. 6D are user interface diagrams for switching an immersive lock screen interface to a home screen.

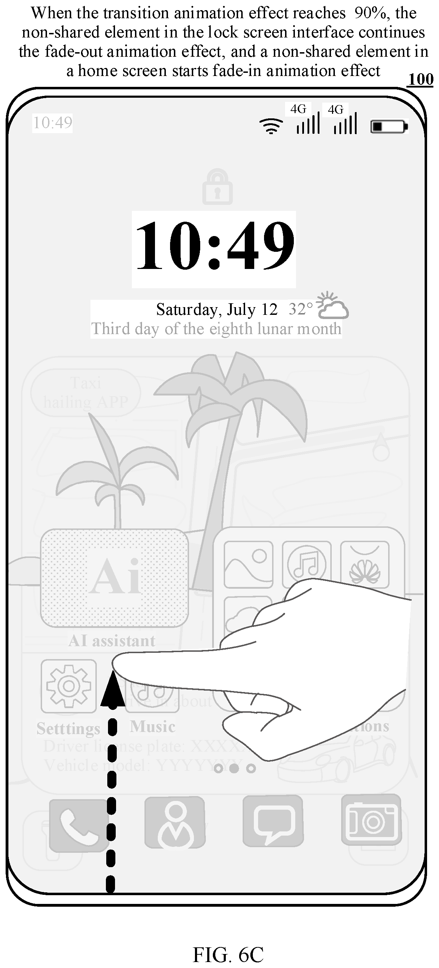

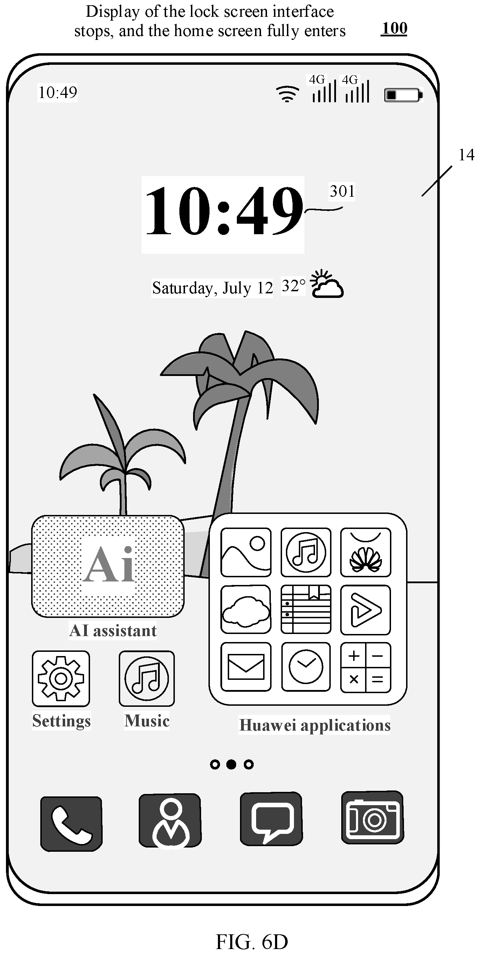

As shown in FIG. 6A and FIG. 6D, the lock screen interface 13 may further include a taxi hailing widget, the home screen 14 does not include a taxi hailing widget, and the taxi hailing widget is a non-shared element in the lock screen interface 13. A clock component 201 in the lock screen interface 13 and a clock component 301 in the home screen 14 have a same layout style and display location. As shown in FIG. 6A to FIG. 6D, a terminal device 100 displays the lock screen interface 13. When detecting that a user starts to perform a slide-to-unlock operation, with sliding of a finger of the user, the terminal device 100 controls a shared element 1 in the lock screen interface 13 to present transition animation effect, and controls the non-shared element (for example, the taxi hailing widget) in the lock screen interface 13 to present fade-out animation effect, that is, the non-shared element is gradually blurred until the non-shared element disappears. As shown in FIG. 6C and FIG. 6D, when it is detected that progress of the fade-out animation effect of the taxi hailing widget reaches 90%, a non-shared element in the home screen 14 starts to present fade-in animation effect.

Specifically, for specific implementation of the interface embodiment 4 (for example, specific implementation of the transition animation effect, the fade-out animation effect, and the fade-in animation effect), further refer to the related descriptions of the interface embodiment 1. Details are not described herein again.

In some usage scenarios (for example, the usage scenarios 1 to 4 and the usage scenarios 6 and 7), the user completes a preset user operation. After detecting that the user completes the preset user operation, and determining that the operation is used to switch the first interface to the second interface, the terminal device 100 controls the first interface to switch to the second interface. In a switching process, the progressive interface switching animation effect provided in embodiments of this application is automatically presented.

The following uses the usage scenarios 2 and 3 as examples to describe, in interface embodiments 5 to 7, an example of the interface switching animation effect presented after the preset user operation is completed.

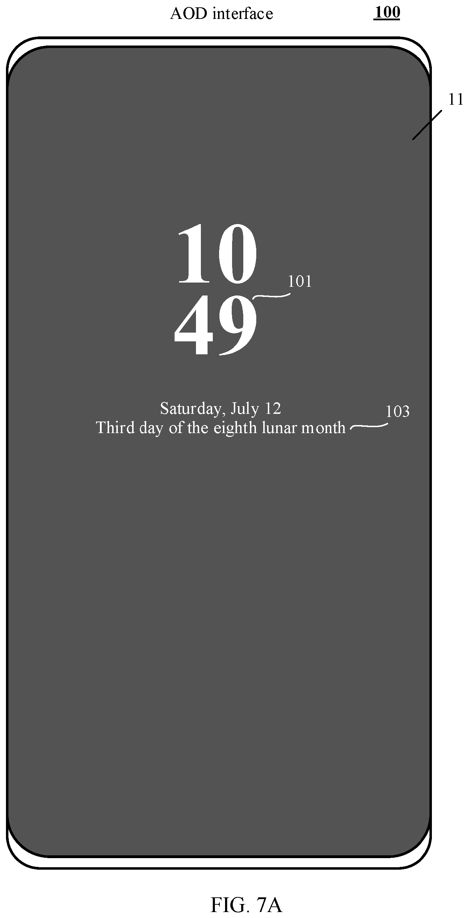

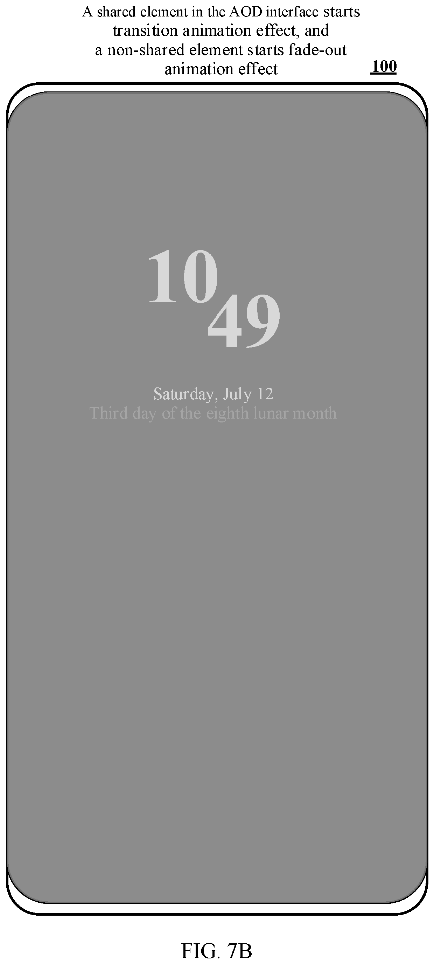

Interface embodiment 5: For example, FIG. 7A to FIG. 7D are user interface diagrams for switching an AOD interface to a home screen.

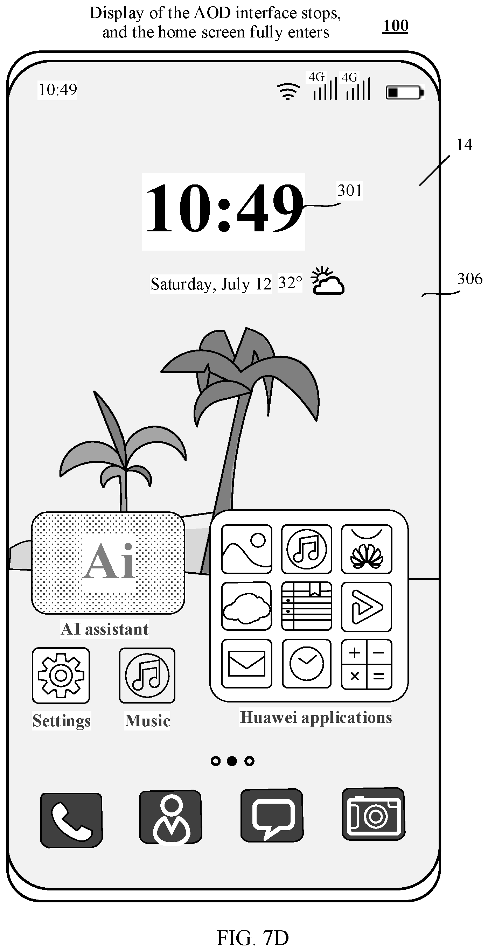

As shown in FIG. 7A and FIG. 7D, the AOD interface 11 includes a clock component 101, the home screen 14 includes a clock component 301, and a shared element of the AOD interface 11 and the home screen 14 includes the clock component. As shown in FIG. 7A to FIG. 7D, when displaying the AOD interface 11, a terminal device 100 detects a user operation 2 (for example, tapping a power button, a slide-to-unlock operation, or a face unlock operation) of a user. After determining that the user operation 2 is used to switch the AOD interface 11 to the home screen 14, in response to the user operation 2, the terminal device 100 controls a shared element 1 (for example, the clock component 101) in the AOD interface 11 to present transition animation effect, and controls a non-shared element (for example, a lunar calendar date 103) in the AOD interface 11 to present fade-out animation effect. For example, in visual effect, after the user completes the user operation 2, the clock component 101 in the AOD interface 11 is deformed and moved toward the clock component 301 in the home screen 14, and the lunar calendar date 103 gradually becomes blurred until the lunar calendar date 103 disappears.

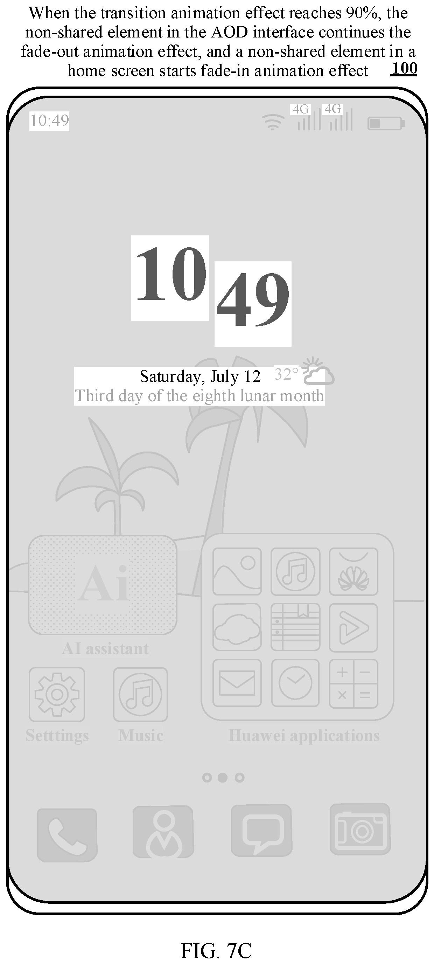

In some embodiments, as shown in FIG. 7C and FIG, 7D, when detecting that progress of the transition animation effect of the shared element 1/progress of the fade-out animation effect of the non-shared element reaches a first value (for example, 90%), the terminal device 100 controls a non-shared element in the home screen 14 to start to present fade-in animation effect, that is, the non-shared element gradually becomes clear until the non-shared element is completely displayed. In an implementation, when the non-shared element in the home screen 14 presents the fade-in animation effect, the non-shared element in the home screen 14 is superimposed and displayed on the non-shared element in the AOD interface 11. For example, in the visual effect, when the progress of the transition animation effect of the clock component 101 reaches 90%, a blurred home screen wallpaper 306 starts to be displayed and the home screen wallpaper 306 gradually becomes clear.

In some embodiments, as shown in FIG. 7C and FIG. 7D, after the non-shared element in the home screen 14 starts to present the fade-in animation effect, the terminal device 100 controls the clock component to continue to deform and/or move until the transition animation effect of the shared element 1 ends (that is, the progress reaches 100%); and controls the non-shared element in the AOD interface 11 to continue the fade-out animation effect until the fade-out animation effect ends.

In some embodiments, end time of any two of the transition animation effect, the fade-out animation effect, and the fade-in animation effect may be the same or may be different. In some embodiments, the end time of the transition animation effect and the end time of the fade-out animation effect may be the same, and are earlier than the end time of the fade-in animation effect.

In some embodiments, in response to the user operation 2, the terminal device 100 controls the non-shared element in the home screen 14 to start to present the fade-in animation effect. In the visual effect, after the user completes the user operation 2, the blurred non-shared element in the home screen 14 starts to be displayed and is gradually clear. In some embodiments, the non-shared element in the home screen 14 starts to present the fade-in animation effect only when the transition animation effect of the shared element 1 ends.

In some embodiments, for specific implementation of the transition animation effect, the fade-in animation effect, and the fade-out animation effect, further refer to the related descriptions in FIG. 3E to FIG. 3G of the interface embodiment 1. Details are not described herein again.

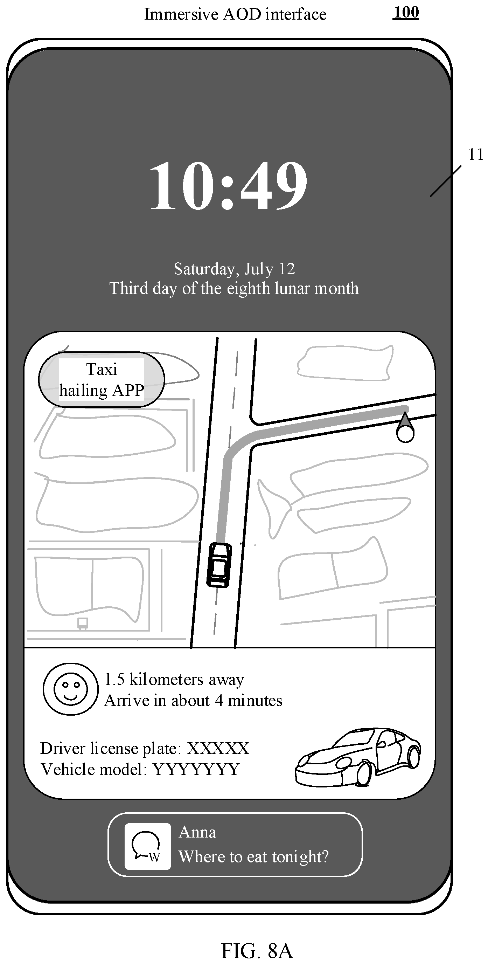

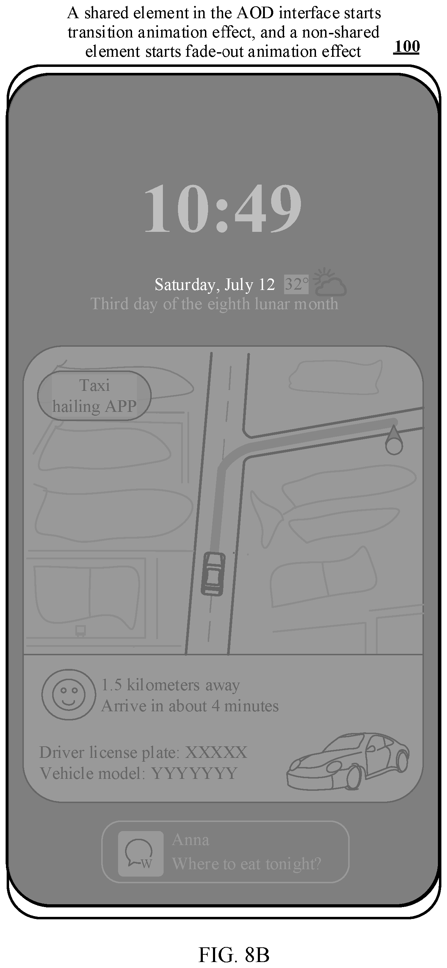

Interface embodiment 6: For example, FIG. 8A to FIG. 8D are user interface diagrams for switching an immersive AOD interface to a home screen.

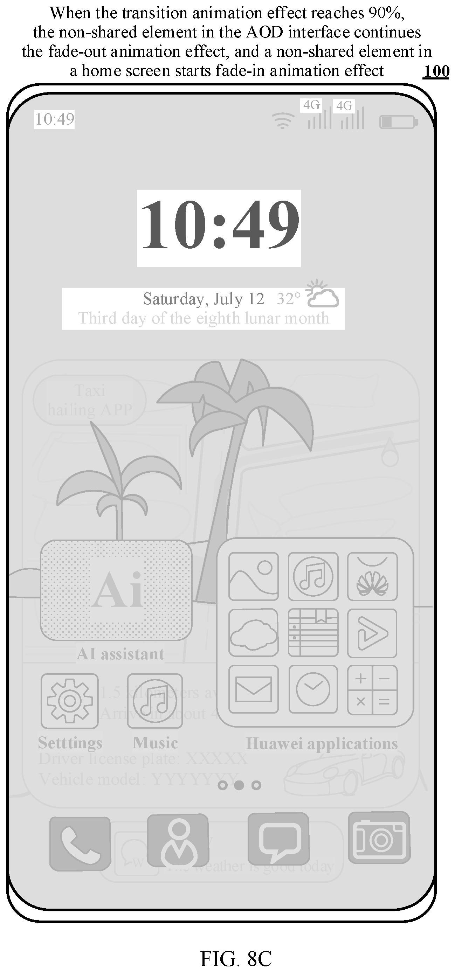

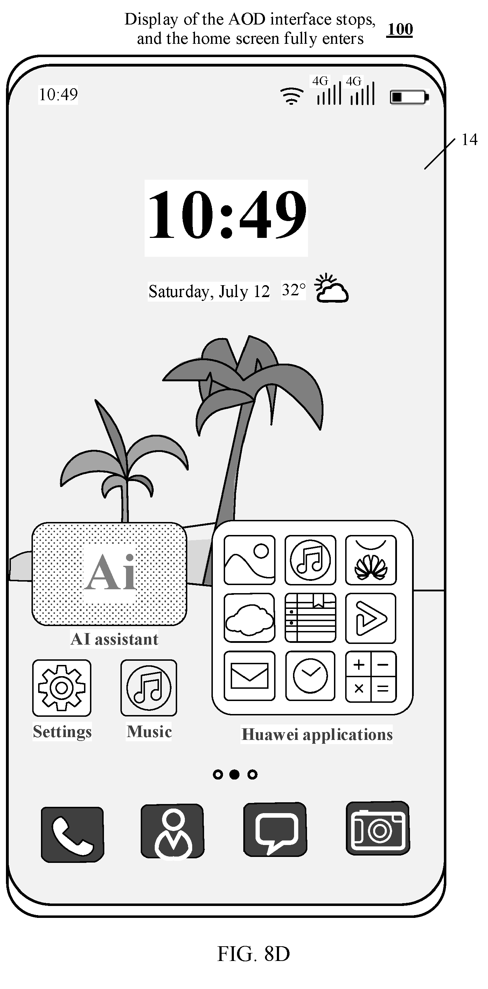

As shown in FIG. 8A and FIG. 8D, the AOD interface 11 may further include a taxi hailing widget, the home screen 14 does not include a taxi hailing widget, and the taxi hailing widget is a non-shared element in the AOD interface 11. A clock component in the AOD interface 11 and a clock component in the home screen 14 have a same layout style and display location. As shown in FIG. 8A to FIG. 8D, when detecting a user operation 2 of a user, and after determining that the user operation 2 is used to switch the AOD interface 11 to the home screen 14, in response to the user operation 2, a terminal device 100 controls a shared element 1 in the AOD interface 11 to present transition animation effect, and controls the non-shared element (for example, the taxi hailing widget) in the AOD interface 11 to present fade-out animation effect, that is, the non-shared element is gradually blurred until the non-shared element disappears. As shown in FIG. 8C and FIG. 8D, when it is detected that progress of the fade-out animation effect of the taxi hailing widget reaches 90%, a non-shared element in the home screen 14 starts to be displayed and gradually becomes clear.

For specific implementation of the interface embodiment 6 (for example, specific implementation of the transition animation effect, the fade-out animation effect, and the fade-in animation effect), further refer to the related descriptions of the interface embodiment 5. Details are not described herein again.

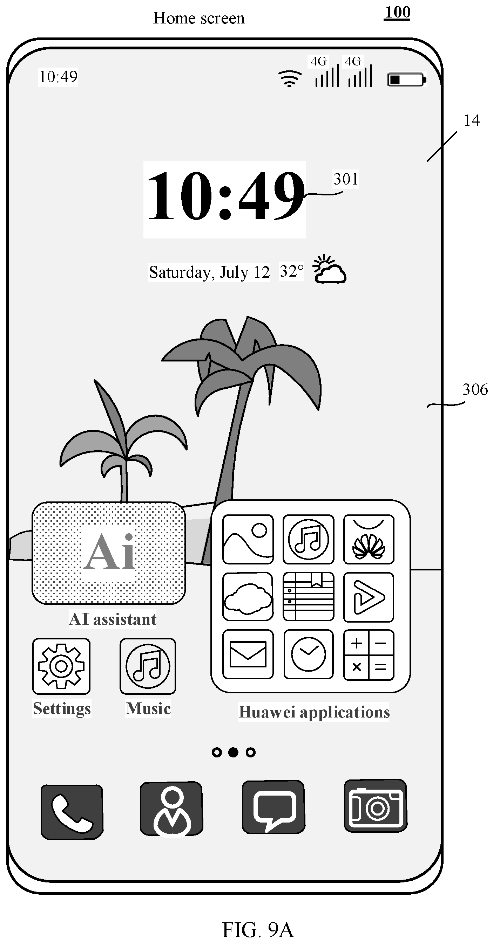

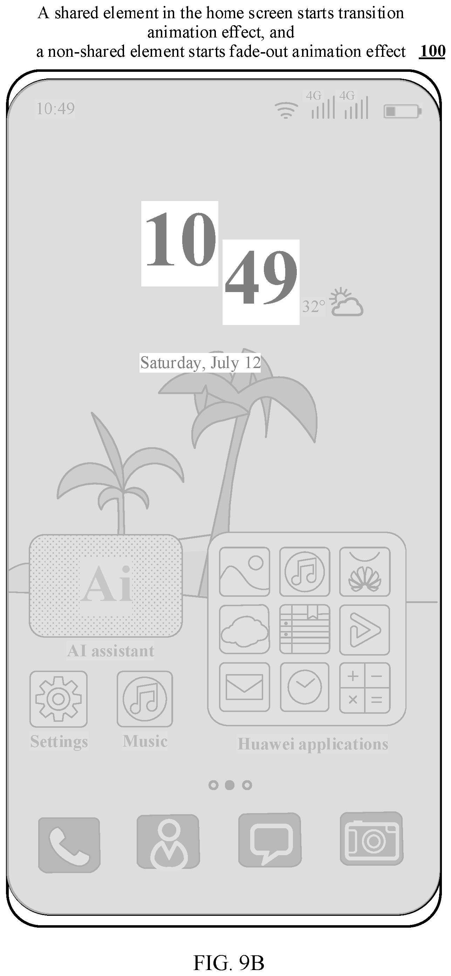

Interface embodiment 7: For example, FIG. 9A to FIG. 9D are user interface diagrams for switching a home screen to an AOD interface.

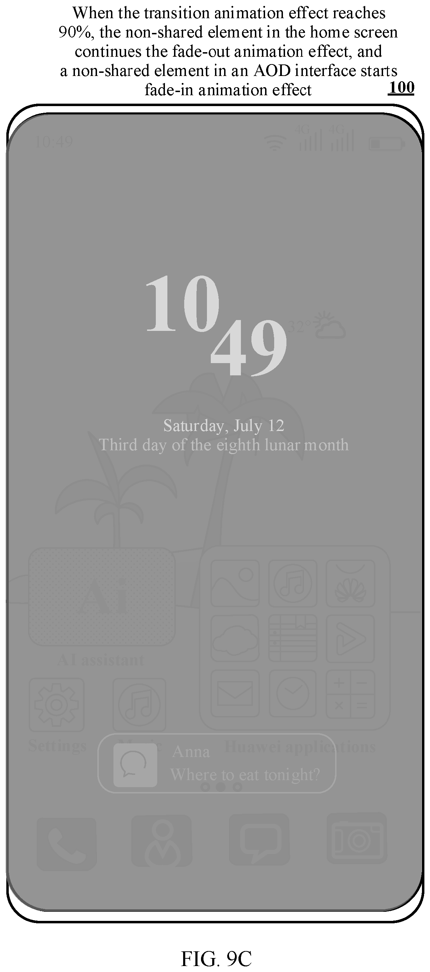

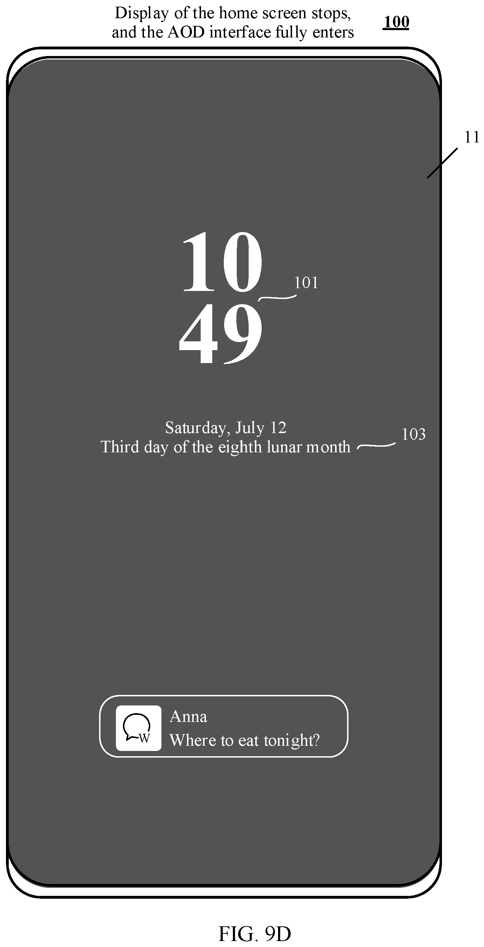

As shown in FIG. 9A and FIG. 9D, the home screen 14 includes a clock component 301, the AOD interface 11 includes a clock component 101, and a shared element of the home screen 14 and the AOD interface 11 includes the clock component. As shown in FIG. 9A to FIG. 9D, when detecting a user operation 3 (for example, tapping a power button) of a user, and after determining that the user operation 3 is used to switch the home screen 14 to the AOD interface 11, in response to the user operation 3, a terminal device 100 controls a shared element 1 in the home screen 14 to present transition animation effect, and controls a non-shared element in the home screen 14 to present fade-out animation effect. For example, the clock component 301 in the home screen 14 is controlled to deform and move toward the clock component 101 in the AOD interface 11, and a home screen wallpaper 306 in the home screen 14 is gradually blurred until the home screen wallpaper 306 disappears. As shown in FIG. 9C and FIG. 9D, when it is detected that progress of the transition animation effect of the clock component 301 reaches 90%, a non-shared element in the AOD interface starts to present fade-in animation effect. For example, a blurred lunar calendar date in the AOD interface starts to be displayed and gradually becomes clear.

For specific implementation of the interface embodiment 7 (for example, specific implementation of the transition animation effect, the fade-out animation effect, and the fade-in animation effect), further refer to the related descriptions of the interface embodiment 5. Details are not described herein again.

In some usage scenarios (for example, the usage scenarios 5 and 7), when detecting that the terminal device 100 meets a preset condition (for example, a preset condition 1 or a preset condition 2), the terminal device 100 automatically switches the first interface to the second interface. In a switching process, the progressive interface switching animation effect provided in embodiments of this application is automatically presented.

The following uses the usage scenarios 8 as an example to describe, in an interface embodiment 8, an example of the interface switching animation effect presented after the preset condition is met.

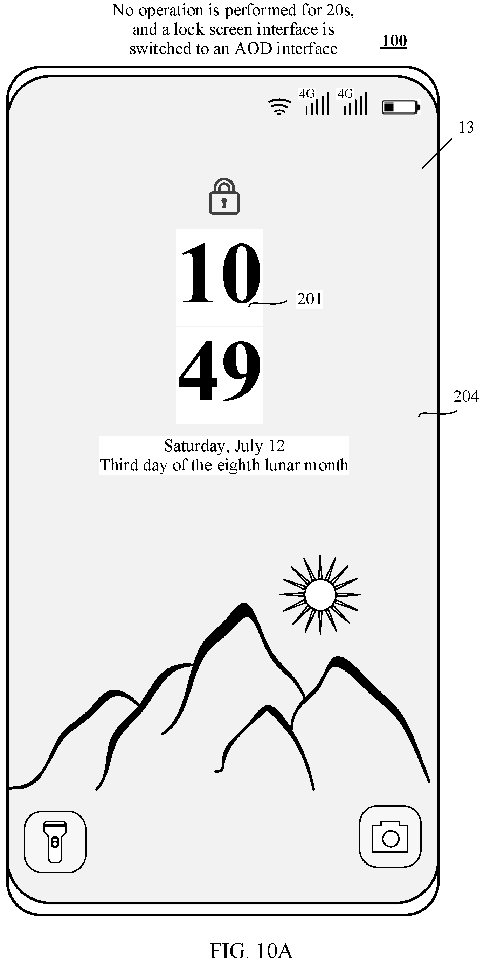

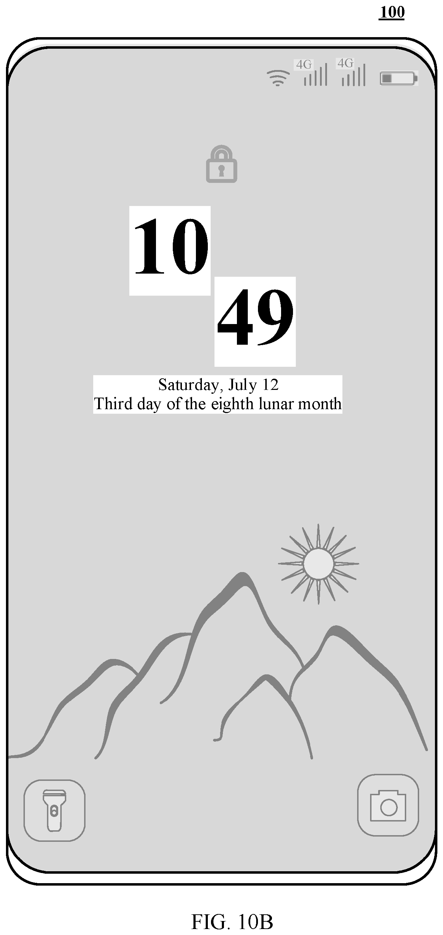

Interface embodiment 8: For example, FIG. 10A to FIG. 10D are user interface diagrams for switching a lock screen interface to an AOD interface.

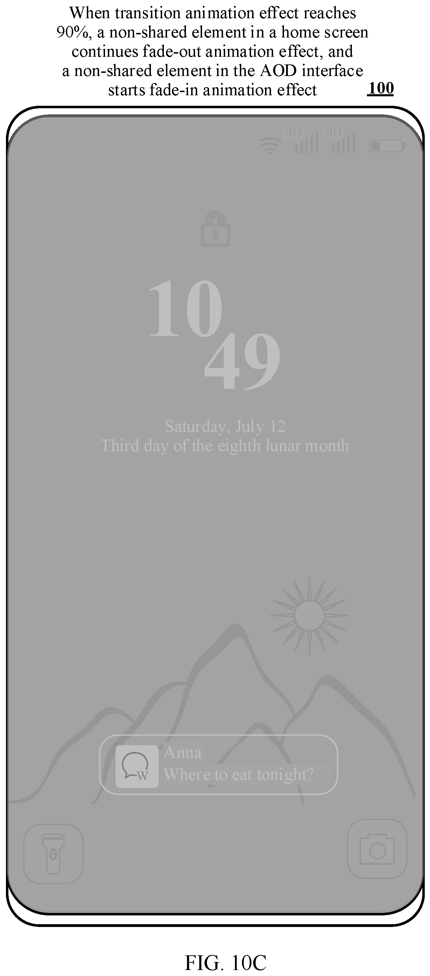

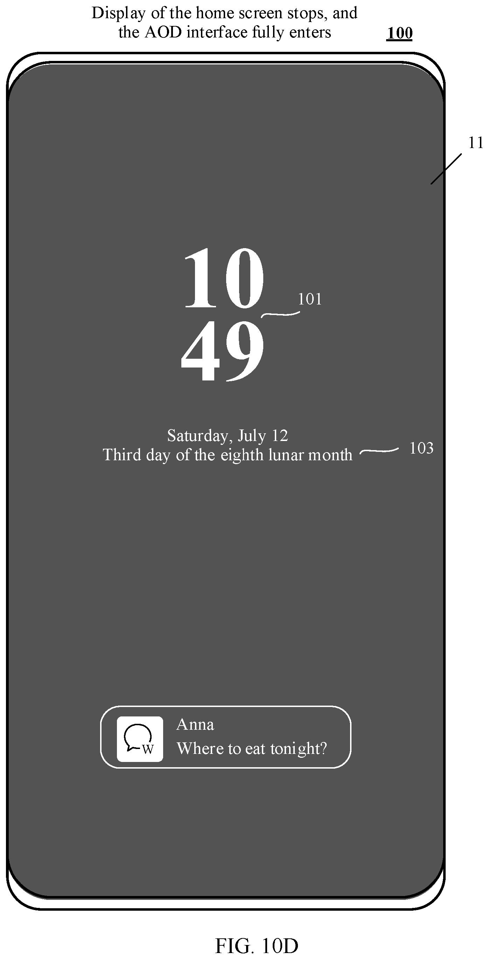

As shown in FIG. 10A and FIG. 10D, the lock screen interface 13 includes a clock component 201, the AOD interface 11 includes a clock component 101, and a shared element of the lock screen interface 13 and the AOD interface 11 includes the clock component. As shown in FIG. 10A to FIG. 10D, when detecting that duration in which a user does not operate the terminal device 100 reaches preset duration (for example, 20s), a terminal device 100 controls a shared element 1 in the lock screen interface 13 to present transition animation effect, and controls a non-shared element in the lock screen interface 13 to present fade-out animation effect. For example, the clock component 201 in the lock screen interface 13 is controlled to deform and move toward the clock component 101 in the AOD interface 11, and a lock screen wallpaper 204 in the lock screen interface 13 is controlled to be gradually blurred until the lock screen wallpaper 204 disappears. As shown in FIG. 10C and FIG. 10D, when it is detected that progress of the transition animation effect of the shared element 1 reaches 90%, a non-shared element (for example, a lunar calendar date 103) in the AOD interface 11 starts to present fade-in animation effect, that is, visually starts to be displayed and gradually becomes clear.

For specific implementation of the interface embodiment 8 (for example, the transition animation effect, the fade-out animation effect, and the fade-in animation effect), further refer to the related descriptions of the interface embodiment 5. Details are not described herein again.

It should be noted that, in embodiments of this application, the shared element 1 is displayed at a first display location in the first interface in a first layout style in the first interface, and the shared element 1 is displayed at a second display location in the second interface in a second layout style in the second interface. That the shared element 1 in the first interface is gradually deformed and/or moved toward the shared element 1 in the second interface means that the shared element 1 is deformed in the first interface, to deform from the first layout style to the second layout style. In addition, the shared element 1 is moved in the first interface, to move from the first display location to the second display location. After the deformation and movement end, the terminal device 100 stops displaying the first interface, and the shared element 1 is displayed in the second interface.

With reference to the foregoing embodiments, the following describes in detail a solution 1 and a solution 2 of the interface switching method provided in embodiments of this application by using an example in which the shared element 1 is a clock component. For specific implementation of another shared element, refer to the related descriptions of the clock component. Details are not described again subsequently.

In the solution 1, the terminal device 100 includes an AOD module, a lock screen module, a home screen module, and a clock component, and all belong to a large home screen architecture of the terminal device 100. The clock component is a component shared by the AOD module, the lock screen module, and the home screen module. To be specific, the three interfaces share a same clock component, but configuration information of the clock component in the interfaces may be different. When interface switching is performed between the AOD interface, the lock screen interface, and the home screen, the clock component does not need to be switched, and only deformation and movement need to be performed based on configuration information of the clock component in an interface that is switched to. Through implementation of this embodiment of this application, switching smoothness of the clock component can be efficiently controlled in a more refined manner.

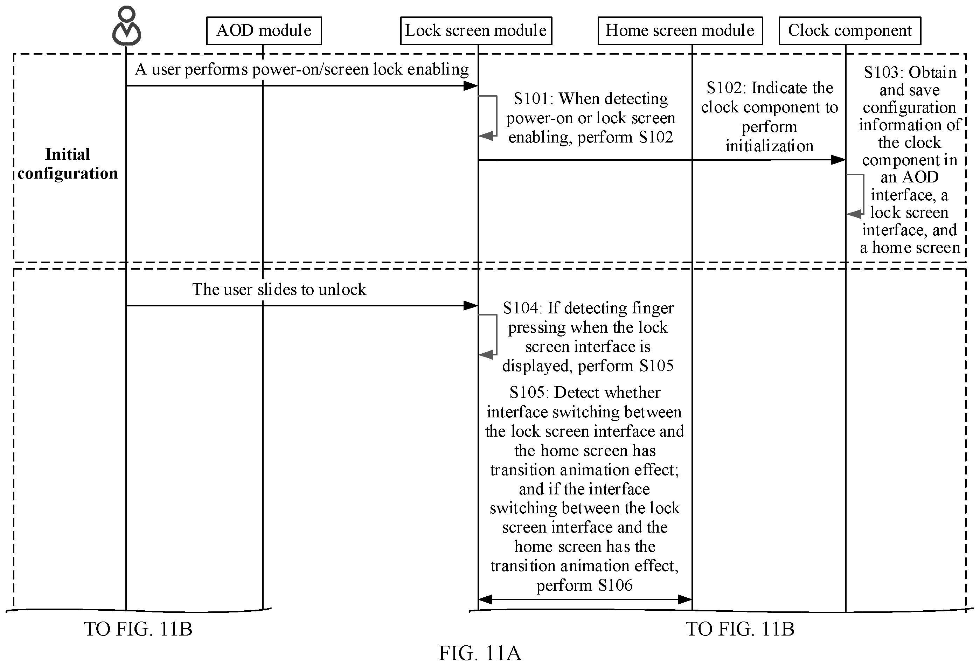

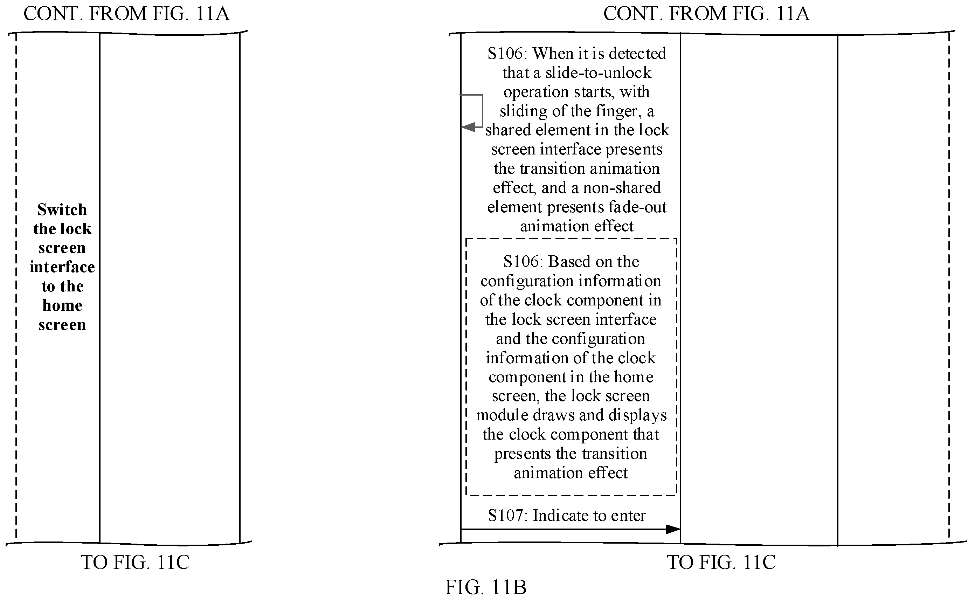

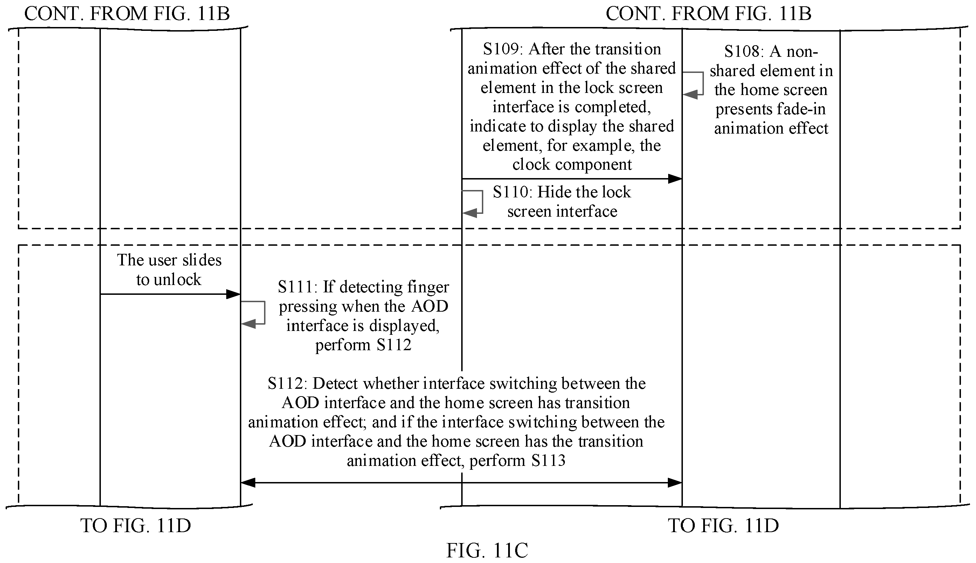

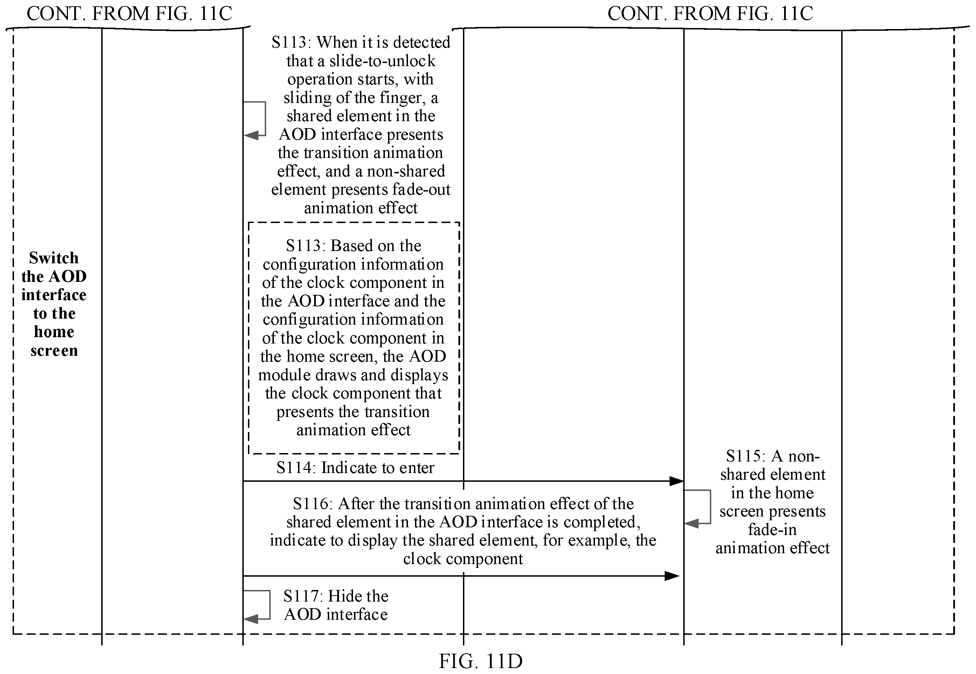

For example, as shown in FIG. 11A to FIG. 11D, a usage scenario in which a lock screen interface/an AOD interface is switched to a home screen through sliding to unlock is used as an example. A method procedure of the interface switching method may include the following phases 1 to 3, and specifically includes a part or all of steps S101 to S117.

### Phase 1: Initial configuration

S101: When detecting power-on/lock screen enabling, the lock screen module performs S102.

S102: The lock screen module indicates the clock component to perform initialization.

In some embodiments, when detecting that the terminal device 100 is powered on, the lock screen module indicates the clock component to perform initialization. In some embodiments, when detecting that the terminal device 100 enables screen locking, the lock screen module indicates the clock component to perform initialization. Optionally, when the terminal device 100 is powered on, screen locking is automatically enabled, and the lock screen interface is displayed. The user can further control the terminal device 100 only after unlocking. In some embodiments, when the terminal device 100 enables screen locking, if the lock screen module detects that the configuration information of the clock component in the lock screen interface is updated, the lock screen module indicates the clock component to perform initialization. In some embodiments, when the terminal device 100 starts the AOD interface, if the AOD module detects that the configuration information of the clock component in the AOD interface is updated, the AOD module indicates the clock component to perform initialization. In some embodiments, when the terminal device 100 starts the home screen, if the home screen module detects that the configuration information of the clock component in the home screen is updated, the home screen module indicates the clock component to perform initialization. An occasion for initializing the clock component is not specifically limited in embodiments of this application.

S103: The clock component performs initialization, including obtaining and saving the configuration information of the clock component in the AOD interface, the lock screen interface, and the home screen.

The configuration information of the clock component in any interface (for example, the AOD interface, the lock screen interface, or the home screen) may include a display location and a layout style of the clock component in the interface. Optionally, the layout style of the clock component in the interface includes a template form and a size of the clock component. Optionally, the user may customize the configuration information of the clock component in the AOD interface, the lock screen interface, and the home screen, for example, change the template form of the clock component, or change the display location of the clock component.

In some embodiments, that the clock component performs initialization includes: The clock component obtains the configuration information of the clock component in the lock screen interface from the lock screen module, and updates to the configuration information of the clock component in the lock screen interface. The clock component obtains the configuration information of the clock component in the AOD interface from the AOD module, and updates to the configuration information of the clock component in the AOD interface. The clock component obtains the configuration information of the clock component in the home screen from the home screen module, and updates to the configuration information of the clock component in the home screen. In some embodiments, the lock screen interface is used as an example. The clock component obtains the configuration information of the clock component in the lock screen interface from the lock screen module. If the configuration information is updated, the lock screen module feeds back latest configuration information to the clock component. If the configuration information is not updated, the lock screen module feeds back indication information to the clock component, to indicate that the configuration information in the lock screen interface is not updated.

In some embodiments, the configuration information of the clock component in the AOD interface is consistent with that in the lock screen interface.

In some embodiments, the home screen system window of the large home screen architecture is used to sequentially superimpose and display the AOD interface, the lock screen interface, and the home screen, and the AOD interface is displayed at an uppermost layer. When the terminal device 100 enters the AOD interface, an uppermost-layer interface displayed in the home screen system window is the AOD interface, and the clock component is displayed in the AOD interface; when the terminal device 100 enters the lock screen interface, the AOD interface is hidden in the home screen system window, a displayed uppermost-layer interface is the lock screen interface, and the clock component is displayed in the lock screen interface; and when the terminal device 100 enters the home screen, the AOD interface and the lock screen interface are hidden in the home screen system window, a displayed uppermost-layer interface is the home screen, and the clock component is displayed in the home screen. In this embodiment of this application, the clock component is uniformly drawn by using a specified module of the system of the terminal device 100.

### Phase 2: Switch from the lock screen interface to the home screen

In this embodiment of this application, the user may switch the lock screen interface to the home screen by performing a slide-to-unlock operation. In an implementation, the slide-to-unlock operation is an operation of sliding in a specified area of the display in a preset direction. For example, the slide-to-unlock operation is an operation of sliding upward at the bottom of the display. For example, the lock screen interface displays a slide-to-unlock control, and the slide-to-unlock operation is an operation of sliding the slide-to-unlock control in a preset direction indicated by the slide-to-unlock control. The slide-to-unlock operation is not specifically limited in this application.

S104: If detecting finger pressing when the lock screen interface is displayed, the lock screen module performs S105.

S105: The lock screen module detects whether interface switching between the lock screen interface and the home screen has transition animation effect; and if the interface switching between the lock screen interface and the home screen has the transition animation effect, performs S106.

In this embodiment of this application, before the lock screen interface is slid to be unlocked, the terminal device 100 may perform S105 on a specified occasion, that is, invoke an interface of the home screen to check whether the interface switching between the lock screen interface and the home screen has the transition animation effect. If the interface switching between the lock screen interface and the home screen has the transition animation effect, a shared element may present the transition animation effect in an interface switching process of the two interfaces.

In some embodiments, when displaying the lock screen interface, if detecting that the user touches the display, the terminal device 100 performs S105. In some embodiments, when displaying the lock screen interface, if detecting that the user touches the specified area of the slide-to-unlock operation, the terminal device 100 performs S105. In this embodiment of this application, the interface of the home screen may alternatively be invoked on another occasion to perform S105. The another occasion is not specifically limited in this application.

In some embodiments, if the lock screen interface and the home screen include a shared element (for example, the clock component), the interface switching between the lock screen interface and the home screen has the transition animation effect. Otherwise, the interface switching between the lock screen interface and the home screen does not have the transition animation effect. In the interface switching process of the two interfaces, all shared elements may present the transition animation effect. In an implementation, the lock screen module invokes the interface of the home screen to send an instruction to the home screen module, to obtain an interface element included in the home screen. The lock screen module determines, based on an interface element included in the lock screen interface and the interface element included in the home screen, whether the lock screen interface and the home screen include a shared element (for example, the clock component).

In some embodiments, a part of interface elements displayed in the lock screen interface can implement the transition animation effect, and a part of interface elements cannot implement the transition animation effect. If the lock screen interface and the home screen include the shared element, and at least one shared element (for example, the clock component) can implement the transition animation effect, the interface switching between the lock screen interface and the home screen has the transition animation effect. In the interface switching process of the two interfaces, only the shared element that can implement the transition animation effect presents the transition animation effect. If the lock screen interface and the home screen do not include the shared element, or the lock screen interface and the home screen include the shared element but the shared element cannot implement the transition animation effect, the interface switching between the two interfaces does not have the transition animation effect. In an implementation, if an interface element in the lock screen interface belongs to a preset trustlist of the transition animation effect, the interface element can implement the transition animation effect. In some embodiments, if the lock screen interface and the home screen include a shared element 2, but the shared element 2 does not have the transition animation effect, the shared element may be classified as a non-shared element in the lock screen interface.

S106: When detecting that the slide-to-unlock operation starts, with sliding of the finger, the lock screen module controls the shared element (for example, the clock component) in the lock screen interface to present the transition animation effect, and controls the non-shared element to present fade-out animation effect.

Step S106 may include steps S106A and S106B.

S106A: With sliding of the finger, the lock screen module controls the shared element (for example, the clock component) in the lock screen interface to present the transition animation effect with respect to a same shared element in the home screen.

S106B: With sliding of the finger, the lock screen module controls the non-shared element in the lock screen interface to present the fade-out animation effect.

In some embodiments, if the interface switching between the lock screen interface and the home screen has the transition animation effect, S106A and S106B are performed. If the interface switching between the lock screen interface and the home screen does not have the transition animation effect, S106B is performed, and S106A is not performed, that is, the transition animation effect does not need to be presented.

In some embodiments, when detecting that the user starts to perform the slide-to-unlock operation, with sliding of the finger, the lock screen module controls the shared element 1 (for example, the clock component) in the lock screen interface to present the transition animation effect, and controls the non-shared element (for example, a wallpaper) to present the fade-out animation effect. In an implementation, when it is detected that a sliding distance of the finger of the user in the specified area in the preset direction is greater than a small preset value, it is determined that the user starts to perform the slide-to-unlock operation. For example, refer to FIG. 3A to FIG. 3D. The user switches the lock screen interface to the home screen by performing the slide-to-unlock operation. With sliding of the finger, the clock component 201 in the lock screen interface 13 presents the transition animation effect, that is, is deformed and moved toward the clock component 301 in the home screen 14, and non-shared elements such as the lunar calendar date 203, the lock screen wallpaper 204, and a lock screen control 205 in the lock screen interface 13 present the fade-out animation effect, that is, the non-shared elements gradually become blurred visually until the non-shared elements disappear.

In some embodiments, that the lock screen module controls the clock component in the lock screen interface to present the transition animation effect with respect to the clock component in the home screen includes: The lock screen module obtains the configuration information of the clock component in the home screen from the clock component; and based on the configuration information of the clock component in the lock screen interface and the configuration information of the clock component in the home screen, draws and displays the clock component that presents the transition animation effect, so that the clock component in the lock screen interface is deformed and moved toward the clock component in the home screen.

S107: The lock screen module indicates the home screen module to enter.

S108: The home screen module controls a non-shared element in the home screen to present fade-in animation effect.

In some embodiments, when it is detected that progress of the transition animation effect of the shared element and/or progress of the fade-out animation effect of the non-shared element in the lock screen interface reach/reaches a first value, the lock screen module indicates the home screen module to enter. In addition, the shared element in the lock screen interface is controlled to continue the transition animation effect, and the non-shared element is controlled to continue the fade-out animation effect. For details, refer to the related descriptions in FIG. 3A to FIG. 3D. For example, as shown in FIG. 3C, when the progress of the transition animation effect reaches 90%, the home screen wallpaper 306 in the home screen is controlled to start to present the fade-in animation effect, that is, start to be displayed at a high blurring degree and gradually become clear.

In some embodiments, when it is detected that the finger of the user is lifted (that is, the slide-to-unlock operation ends), the lock screen module indicates the home screen module to enter. In addition, if the transition animation effect and the fade-out animation effect are not completed, the shared element in the lock screen interface is controlled to continue the transition animation effect, and the non-shared element is controlled to continue the fade-out animation effect.

In some embodiments, when it is detected that the transition animation effect of the shared element and/or the fade-out animation effect of the non-shared element in the lock screen interface are/is completed, the lock screen module indicates the home screen to enter.

In some embodiments, when detecting that the slide-to-unlock operation starts, with sliding of the finger, the lock screen module controls the non-shared element in the home screen to present the fade-in animation effect, that is, the fade-in animation effect of the non-shared element in the home screen, and the transition animation effect of the shared element and the fade-out animation effect of the non-shared element in the lock screen interface start simultaneously.

In some embodiments, if the non-shared element in the home screen has entry animation effect, the fade-in animation effect can be implemented while the entry animation effect is presented.

In some embodiments, the lock screen module indicates the home screen module to enter. In step S108, the lock screen interface is superimposed and displayed on the home screen. With the transition animation effect and the fade-out animation effect of the lock screen interface, the home screen superimposed and displayed under the lock screen interface can be visually observed. The home screen module controls entry of the non-shared element in the home screen to present the fade-in animation effect. The shared element (for example, the clock component) shared by the lock screen module and the home screen module is still currently displayed in the lock screen interface.

For specific implementation of the transition animation effect, the fade-in animation effect, and the fade-out animation effect (for example, end time of the three types of animation effect), further refer to the related descriptions in FIG. 3A to FIG. 3O. Details are not described herein again.

S109: After the transition animation effect of the shared element in the lock screen interface is completed, the lock screen module indicates the home screen module to display the shared element, for example, the clock component.

S110: After the transition animation effect of the shared element in the lock screen interface is completed, the lock screen module hides the lock screen interface.

In steps S106 to S108, the lock screen module controls the shared element 1 (for example, the clock component) in the lock screen interface to deform and move toward the shared element 1 in the home screen, and controls the non-shared element in the lock screen interface to be gradually blurred until the non-shared element disappears. The home screen module controls the non-shared element in the home screen to be displayed blurred at the beginning and gradually clear.

In some embodiments, in steps S106 to S108, the lock screen module invokes, based on the configuration information of the clock component in the lock screen interface and the configuration information of the clock component in the home screen, the system to draw the clock component that presents the transition animation effect, and displays the clock component in the lock screen interface. In step S109, after the transition animation effect of the clock component and the fade-out animation effect of the non-shared element in the lock screen interface are completed, the lock screen module indicates the home screen module to display the clock component in the home screen, and the home screen module invokes the system to draw the clock component based on the configuration information of the clock component in the home screen, and displays the clock component in the home screen. In addition, in step S110, the lock screen module in the home screen system window hides or stops displaying the lock screen interface, and the uppermost-layer interface displayed in the home screen system window is switched to the home screen.

### Phase 3: Switch from the AOD interface to the home screen

In this embodiment of this application, the user may switch the AOD interface to the home screen by performing a slide-to-unlock operation. In an implementation, the slide-to-unlock operation is an operation of sliding in a specified area of the display in a preset direction. For example, the slide-to-unlock operation is an operation of sliding upward at the bottom of the display. For example, the AOD interface displays a slide-to-unlock control, and the slide-to-unlock operation is an operation of sliding the slide-to-unlock control in a preset direction indicated by the slide-to-unlock control. The slide-to-unlock operation is not specifically limited in this application.

S111: If detecting finger pressing when the AOD interface is displayed, the AOD module performs S112.

S112: The AOD module detects whether interface switching between the AOD interface and the home screen has transition animation effect; and if the interface switching between the AOD interface and the home screen has the transition animation effect, performs S113.

In this embodiment of this application, before the AOD interface is slid to be unlocked, the terminal device 100 may perform S112 on a specified occasion, that is, invoke an interface of the home screen to check whether the interface switching between the AOD interface and the home screen has the transition animation effect. If the interface switching between the AOD interface and the home screen has the transition animation effect, a shared element may present the transition animation effect in an interface switching process of the two interfaces.

In some embodiments, when displaying the AOD interface, if detecting that the user touches the display, the terminal device 100 performs S112. In some embodiments, when displaying the AOD interface, if detecting that the user touches the specified area of the slide-to-unlock operation, the terminal device 100 performs S112. In this embodiment of this application, the interface of the home screen may alternatively be invoked on another occasion to perform S112. The another occasion is not specifically limited in this application.

In some embodiments, if the AOD interface and the home screen include a shared element (for example, the clock component), the interface switching between the AOD interface and the home screen has the transition animation effect. Otherwise, the interface switching between the AOD interface and the home screen does not have the transition animation effect. In the interface switching process of the two interfaces, all shared elements may present the transition animation effect. In an implementation, the AOD module invokes the interface of the home screen to send an instruction to the home screen module, to obtain an interface element included in the home screen. The AOD module determines, based on an interface element included in the AOD interface and the interface element included in the home screen, whether the AOD interface and the home screen include a shared element (for example, the clock component).

In some embodiments, a part of interface elements displayed in the AOD interface can implement the transition animation effect, and a part of interface elements cannot implement the transition animation effect. If the AOD interface and the home screen include the shared element, and at least one shared element (for example, the clock component) can implement the transition animation effect, the interface switching between the AOD interface and the home screen has the transition animation effect. In the interface switching process of the two interfaces, only the shared element that can implement the transition animation effect presents the transition animation effect. If the AOD interface and the home screen do not include the shared element, or the AOD interface and the home screen include the shared element but the shared element cannot implement the transition animation effect, the interface switching between the two interfaces does not have the transition animation effect. In an implementation, if an interface element in the AOD interface belongs to a preset trustlist of the transition animation effect, the interface element can implement the transition animation effect. In some embodiments, if the AOD interface and the home screen include a shared element 2, but the shared element 2 does not have the transition animation effect, the shared element may be classified as a non-shared element in the AOD interface.

S113: When detecting that the slide-to-unlock operation starts, with sliding of the finger, the AOD module controls the shared element (for example, the clock component) in the AOD interface to present the transition animation effect, and controls the non-shared element to present fade-out animation effect.

Step S113 may include steps S113A and S113B.

S113A: With sliding of the finger, the AOD module controls the shared element (for example, the clock component) in the AOD interface to present the transition animation effect with respect to a same shared element 1 in the home screen.

S113B: With sliding of the finger, the AOD module controls the non-shared element in the AOD interface to present the fade-out animation effect.

In some embodiments, if the interface switching between the AOD interface and the home screen has the transition animation effect, S113A and S113B are performed. If the interface switching between the AOD interface and the home screen does not have the transition animation effect, S113B is performed, and S113A is not performed, that is, the transition animation effect does not need to be presented.

In some embodiments, when detecting that the user starts to perform the slide-to-unlock operation, with sliding of the finger, the AOD module controls the shared element 1 (for example, the clock component) in the AOD interface to present the transition animation effect, and controls the non-shared element (for example, a wallpaper) to present the fade-out animation effect. In an implementation, when it is detected that a sliding distance of the finger of the user in the specified area in the preset direction is greater than a small preset value, it is determined that the user starts to perform the slide-to-unlock operation. For example, refer to FIG. 7A to FIG. 7D. The user may alternatively switch the AOD interface to the home screen by performing the slide-to-unlock operation. With sliding of the finger, the clock component 101 in the AOD interface 13 presents the transition animation effect, that is, is deformed and moved toward the clock component 301 in the home screen 14, and the lunar calendar date 103 in the AOD interface 13 presents the fade-out animation effect, that is, the lunar calendar date 103 gradually becomes blurred visually until the lunar calendar date 103 disappears.

In some embodiments, that the AOD module controls the clock component in the AOD interface to present the transition animation effect with respect to the clock component in the home screen includes: The AOD module obtains the configuration information of the clock component in the home screen from the clock component; and based on the configuration information of the clock component in the AOD interface and the home screen, draws and displays the clock component that presents the transition animation effect, so that the clock component in the AOD interface is deformed and moved toward the clock component in the home screen.

S114: The AOD module indicates the home screen module to enter.

S115: The home screen module controls a non-shared element in the home screen to present fade-in animation effect.

In some embodiments, when it is detected that progress of the transition animation effect of the shared element and/or progress of the fade-out animation effect of the non-shared element in the AOD interface reach/reaches a first value, the AOD module indicates the home screen module to enter. In addition, the shared element in the AOD interface is controlled to continue the transition animation effect, and the non-shared element in the AOD interface is controlled to continue the fade-out animation effect. For details, refer to the related descriptions in FIG. 7A to FIG. 7D. For example, as shown in FIG. 3C, when the progress of the transition animation effect reaches 90%, the home screen wallpaper 306 in the home screen is controlled to start to present the fade-in animation effect, that is, start to be displayed at a high blurring degree and gradually become clear.

In some embodiments, when it is detected that the finger of the user is lifted (that is, the slide-to-unlock operation ends), the AOD module indicates the home screen module to enter, to start the fade-in animation effect of the non-shared element. In addition, if the transition animation effect and the fade-out animation effect are not completed, the shared element in the AOD interface is controlled to continue the transition animation effect, and the non-shared element is controlled to continue the fade-out animation effect.

In some embodiments, when it is detected that the transition animation effect of the shared element and/or the fade-out animation effect of the non-shared element in the AOD interface are/is completed, the AOD module indicates the home screen module to enter, to start the fade-in animation effect of the non-shared element.

In some embodiments, when detecting that the slide-to-unlock operation starts, with sliding of the finger, the AOD module controls the non-shared element in the home screen to present the fade-in animation effect, that is, the fade-in animation effect of the non-shared element in the home screen, and the transition animation effect of the shared element and the fade-out animation effect of the non-shared element in the AOD interface start simultaneously.

In some embodiments, if the non-shared element in the home screen has entry animation effect, the fade-in animation effect can be implemented while the original entry animation effect is presented.

In some embodiments, the AOD module indicates the home screen module to enter. In step S108, the AOD interface is superimposed and displayed on the home screen. With the transition animation effect and the fade-out animation effect of the lock screen interface, the home screen superimposed and displayed under the AOD interface can be visually observed. The home screen module controls entry of the non-shared element in the home screen to present the fade-in animation effect. The shared element (for example, the clock component) shared by the AOD module and the home screen module is still currently displayed in the AOD interface. In some embodiments, the AOD interface, the lock screen interface, and the home screen in the home screen system window are sequentially superimposed and displayed. Before step S107 and after the slide-to-unlock operation is started, the lock screen module hides the lock screen interface in the home screen system window, so that the AOD interface is transparent, and the interface element in the home screen can be observed.

For specific implementation of the transition animation effect, the fade-in animation effect, and the fade-out animation effect, further refer to the related descriptions in FIG. 3A to FIG. 3O and FIG. 7A to FIG. 7D. Details are not described herein again.

S116: After the transition animation effect of the shared element in the AOD interface is completed, the AOD module indicates the home screen module to display the shared element, for example, the clock component.

S117: After the transition animation effect of the shared element in the AOD interface is completed, the AOD module hides the AOD interface.

In steps S113 to S115, the AOD module controls the shared element 1 (for example, the clock component) in the AOD interface to deform and move toward the shared element 1 in the home screen, and controls the non-shared element in the AOD interface to be gradually blurred until the non-shared element disappears. The home screen module controls the non-shared element in the home screen to be displayed blurred at the beginning and gradually clear.

In some embodiments, in steps S113 to S115, the AOD module invokes, based on the configuration information of the clock component in the AOD interface and the configuration information of the clock component in the home screen, the system to draw the clock component that is in the AOD interface and that presents the transition animation effect, and display the clock component in the AOD interface. In step S116, after the transition animation effect of the clock component and the fade-out animation effect of the non-shared element in the AOD interface are completed, the AOD module indicates the home screen module to display the clock component in the home screen, and the home screen module invokes the system to draw the clock component based on the configuration information of the clock component in the home screen, and displays the clock component in the home screen. In addition, in step S117, the AOD module in the home screen system window hides or stops displaying the AOD interface, and the uppermost-layer interface displayed in the home screen system window is switched to the home screen.

In some other usage scenarios of the solution 1, the user completes a preset user operation. After detecting that the user completes the preset user operation (for example, a face unlock operation, a slide-to-unlock operation, or power button tapping), and determining that the operation is used to switch the lock screen interface/AOD interface to the home screen, the terminal device 100 controls the lock screen interface/AOD interface to switch to the home screen. In a switching process, the progressive interface switching animation effect provided in embodiments of this application is automatically presented. Specifically, for example, the lock screen interface is switched to the home screen. The terminal device 100 performs S101 to S103, and the clock component performs initialization. The terminal device 100 performs S105 on a specified occasion before the preset user operation, to determine whether switching between the lock screen interface and the home screen interface has the transition animation effect. After detecting that the user completes the preset user operation, and determining that the operation is used to switch the lock screen interface to the home screen, the terminal device controls the shared element (for example, the clock component) in the lock screen interface to present the transition animation effect, controls the non-shared element to present the fade-out animation effect, and performs S107 to S110. For specific implementation, refer to the related descriptions of the interface embodiments and the method procedure in FIG. 11A to FIG. 11D. Details are not described herein again.

In some other usage scenarios of the solution 1, when detecting that the terminal device 100 meets a preset condition, the terminal device 100 automatically switches the lock screen interface/AOD interface to the home screen. In a switching process, the progressive interface switching animation effect provided in embodiments of this application is automatically presented. Specifically, for example, the lock screen interface is switched to the home screen. The terminal device 100 performs S101 to S103, and the clock component performs initialization. The terminal device 100 performs S105 on a specified occasion before detecting the preset condition, to determine whether switching between the lock screen interface and the home screen interface has the transition animation effect. After detecting that the terminal device 100 meets the preset condition, the terminal device controls the shared element (for example, the clock component) in the lock screen interface to present the transition animation effect, controls the non-shared element to present the fade-out animation effect, and performs S107 to S110. For specific implementation, refer to the related descriptions of the interface embodiments and the method procedure in FIG. 11A to FIG. 11D. Details are not described herein again.

In the solution 2, the terminal device 100 includes an AOD module, a lock screen module, a home screen module, a weather widget, and a widget management module. Clock components of the AOD interface and the lock screen interface are drawn by the lock screen module. The weather widget displayed in the home screen includes a clock component, and the clock component of the home screen is drawn by the weather widget. When the lock screen interface/AOD interface is switched to the home screen, the clock component drawn by the lock screen module is deformed and moved toward the clock component in the home screen. After deformation and movement are completed, the clock component is switched to the clock component in the home screen drawn by the weather widget.

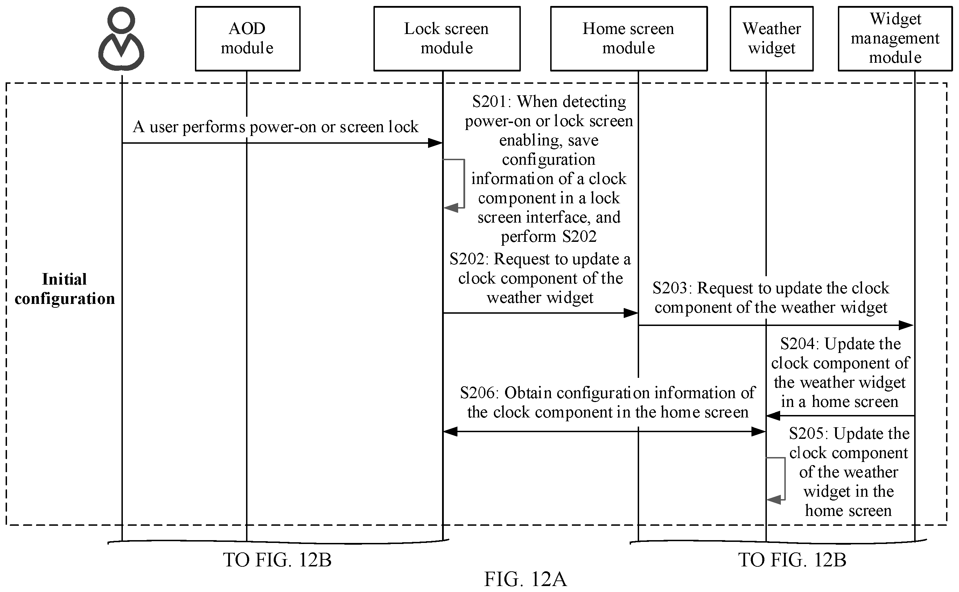

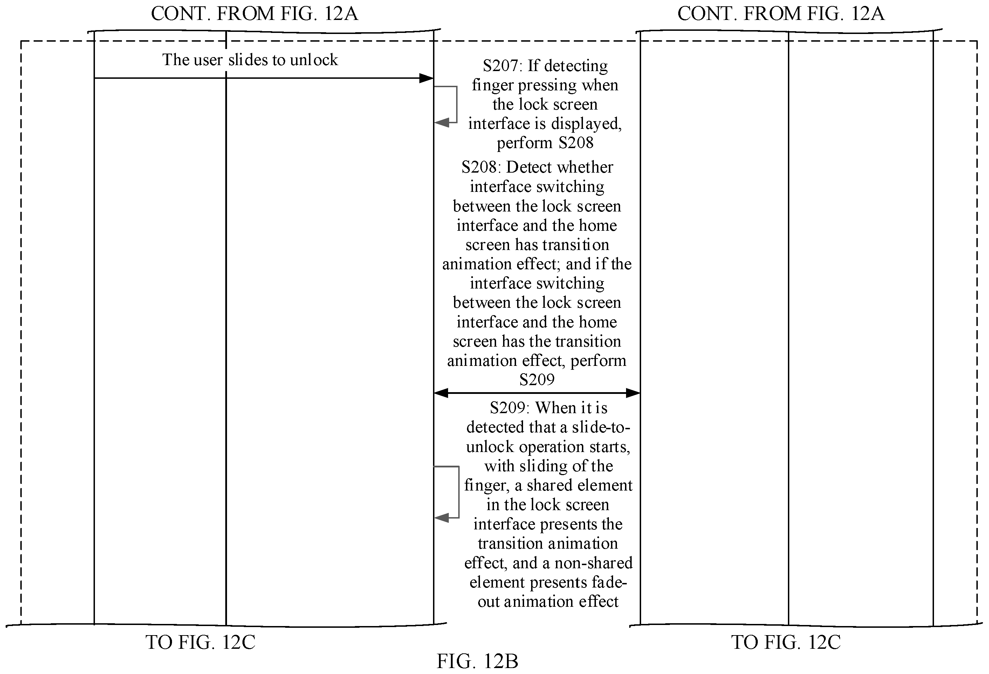

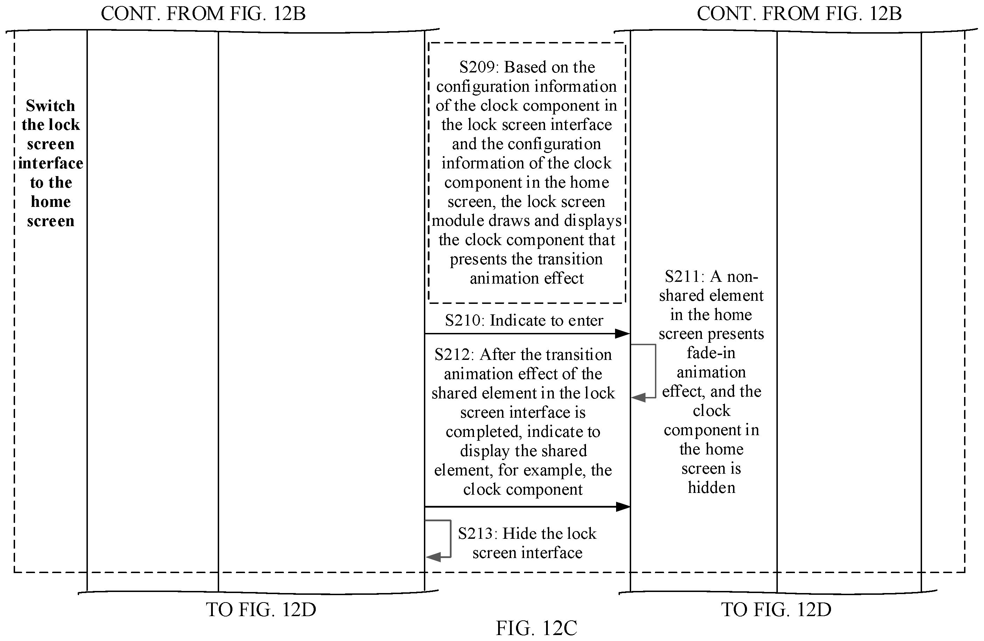

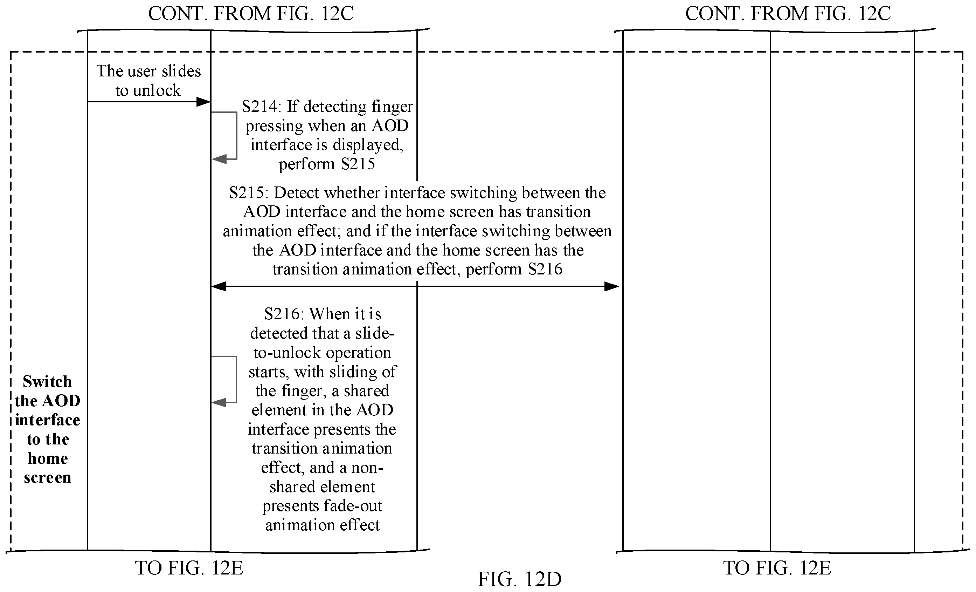

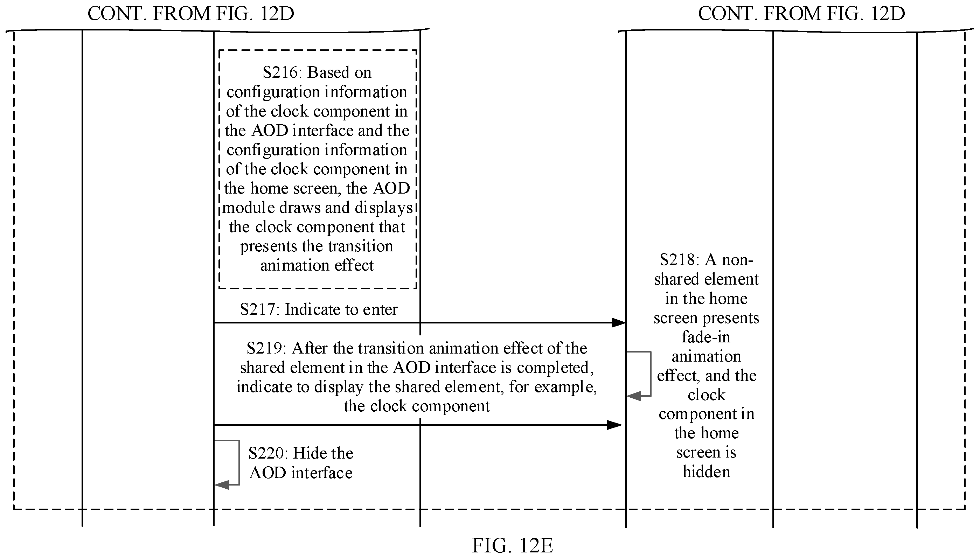

For example, as shown in FIG. 12A to FIG. 12E, a usage scenario in which a lock screen interface/an AOD interface is switched to a home screen through sliding to unlock is used as an example. A method procedure of the interface switching method may include the following phases 1 to 3, and specifically includes a part or all of steps S201 to S220.

### Phase 1: Initial configuration

S201: When detecting power-on/lock screen enabling, the lock screen module saves configuration information of the clock component in the lock screen interface, and performs S202.

In some embodiments, upon power-on or lock screen enabling, the lock screen module calculates and saves the configuration information (for example, a layout style and a display location) of the clock component in the lock screen interface in advance based on layout information of the lock screen interface.

S202: The lock screen module requests the home screen module to update the clock component of the weather widget in the home screen.

S203: The home screen module requests the widget management module to update the clock component of the weather widget in the home screen.

In some embodiments, before step S203, the home screen module calculates and saves configuration information (for example, a layout style and a display location) of the clock component in the home screen in advance based on layout information of the home screen. In step S203, the home screen module sends a request message to the widget management module, to request to update the clock component of the weather widget in the home screen, where the request message includes the configuration information of the clock component in the home screen.

S204: The widget management module indicates the weather widget to update the clock component of the weather widget in the home screen.

S205: The weather widget updates the clock component of the weather widget based on the configuration information of the clock component in the home screen.

In some embodiments, the widget management module sends a notification message to the weather widget, to indicate to update the clock component of the weather widget in the home screen, where the notification message includes the configuration information of the clock component in the home screen; and the weather widget updates a layout of the clock component of the weather widget based on the configuration information of the clock component in the home screen.

In steps S202 to S205, the lock screen module triggers, via the widget management framework, update of the clock component in the home screen, and the notification message may carry a specific field, to identify, by the weather widget, that the configuration information update is triggered by the lock screen interface.

S206: The lock screen module obtains the configuration information of the clock component in the home screen from the weather widget.

In some embodiments, the lock screen module may provide a component like Service/Provider/ServiceExtension for weather. The weather module may establish communication with the lock screen module by connecting to the component, and the lock screen module may obtain the configuration information of the clock component in the home screen from the weather widget through the connection. Subsequently, when the lock screen module needs to present transition animation effect of the clock component, the lock screen module may perform consistent layout (that is, deform and move toward the clock component in the home screen) based on the configuration information of the clock component in the home screen, to implement the transition animation effect of the clock component.

### Phase 2: Switch from the lock screen interface to the home screen

S207: If detecting finger pressing when the lock screen interface is displayed, the lock screen module performs S208.

S208: The lock screen module detects whether interface switching between the lock screen interface and the home screen has transition animation effect; and if the interface switching between the lock screen interface and the home screen has the transition animation effect, performs S209.

S209: When detecting that a slide-to-unlock operation starts, with sliding of the finger, the lock screen module controls the shared element (for example, the clock component) in the lock screen interface to present the transition animation effect, and controls the non-shared element to present fade-out animation effect.

Step S209 may include steps S209A and S209B.

S209A: With sliding of the finger, the lock screen module controls the shared element (for example, the clock component) in the lock screen interface to present the transition animation effect with respect to a same shared element in the home screen.

S209B: With sliding of the finger, the lock screen module controls the non-shared element in the lock screen interface to present the fade-out animation effect.

In some embodiments, if the interface switching between the lock screen interface and the home screen has the transition animation effect, S209A and S209B are performed. If the interface switching between the lock screen interface and the home screen does not have the transition animation effect, S209B is performed, and S209A is not performed, that is, the transition animation effect does not need to be presented.

In some embodiments, that the lock screen module controls the clock component in the lock screen interface to present the transition animation effect with respect to the clock component in the home screen includes: The lock screen module draws and displays, based on the configuration information of the clock component in the lock screen interface and the configuration information of the clock component in the home screen, the clock component that presents the transition animation effect, so that the clock component in the lock screen interface is deformed and moved toward the clock component in the home screen until the clock component in the lock screen interface can completely coincide with the clock component in the home screen.

S210: The lock screen module indicates entry of a non-shared element to the home screen module.

S211: The home screen module controls the non-shared element in the home screen to present fade-in animation effect, and controls to hide the clock component in the home screen.

It may be understood that the clock component in the lock screen interface and the clock component in the home screen are not shared. Currently, the lock screen module draws and displays the clock component that presents the transition animation effect. Therefore, the clock component in the home screen needs to be hidden.

S212: After the transition animation effect of the shared element in the lock screen interface is completed, the lock screen module indicates the home screen module to display the shared element, for example, the clock component.

S213: After the transition animation effect of the shared element in the lock screen interface is completed, the lock screen module hides the lock screen interface.

In some embodiments, in steps S209 to S211, based on the configuration information of the clock component in the lock screen interface and the configuration information of the clock component in the home screen, the lock screen module draws the clock component that presents the transition animation effect, and displays the clock component in the lock screen interface. In step S212, after the transition animation effect of the clock component and the fade-out animation effect of the non-shared element in the lock screen interface are completed, the lock screen module indicates the home screen module to display the clock component in the home screen, and the home screen module invokes the weather widget to draw and display, based on the configuration information of the clock component in the home screen, the clock component in the home screen. In addition, in step S110, the lock screen module in the home screen system window hides or stops displaying the lock screen interface, and an uppermost-layer interface displayed in the home screen system window is switched to the home screen.

For specific implementation of steps S207 to S213, refer to the related descriptions in steps S104 to S110. Details are not described herein again.

### Phase 3: Switch from the AOD interface to the home screen

S214: If detecting finger pressing when the AOD interface is displayed, the AOD module performs S215.

S215: The AOD module detects whether interface switching between the AOD interface and the home screen has transition animation effect; and if the interface switching between the AOD interface and the home screen has the transition animation effect, performs S216.

S216: When detecting that a slide-to-unlock operation starts, with sliding of the finger, the AOD module controls a shared element (for example, a clock component) in the AOD interface to present the transition animation effect, and controls a non-shared element to present fade-out animation effect.

Step S216 may include steps S216A and S216B.

S216A: With sliding of the finger, the AOD module controls the shared element (for example, the clock component) in the AOD interface to present the transition animation effect with respect to a same shared element in the home screen.

S216B: With sliding of the finger, the AOD module controls the non-shared element in the AOD interface to present the fade-out animation effect.

In some embodiments, if the interface switching between the AOD interface and the home screen has the transition animation effect, S209A and S209B are performed. If the interface switching between the AOD interface and the home screen does not have the transition animation effect, S209B is performed, and S209A is not performed, that is, the transition animation effect does not need to be presented.

In some embodiments, that the AOD module controls the clock component in the AOD interface to present the transition animation effect with respect to the clock component in the home screen includes: The AOD module invokes the lock screen module to draw and display, based on the configuration information of the clock component in the AOD interface and the configuration information of the clock component in the home screen, the clock component that presents the transition animation effect, so that the clock component in the AOD interface is deformed and moved toward the clock component in the home screen until the clock component in the AOD interface can completely coincide with the clock component in the home screen.

S217: The AOD module indicates the home screen module to enter.

S218: The home screen module controls a non-shared element in the home screen to present fade-in animation effect, and controls to hide the clock component in the home screen.

It may be understood that the clock component in the AOD interface and the clock component in the home screen are not shared. Currently, the lock screen module draws and displays, in the AOD interface, the clock component that presents the transition animation effect. Therefore, the clock component in the home screen needs to be hidden.

S219: After the transition animation effect of the shared element in the AOD interface is completed, the AOD module indicates the home screen module to display the shared element, for example, the clock component.

S220: After the transition animation effect of the shared element in the AOD interface is completed, the AOD module hides the AOD interface.

In some embodiments, in steps S214 to S218, based on the configuration information of the clock component in the AOD interface and the configuration information of the clock component in the home screen, the lock screen module draws the clock component that presents the transition animation effect, and displays the clock component in the AOD interface. In step S212, after the transition animation effect of the clock component and the fade-out animation effect of the non-shared element in the AOD interface are completed, the AOD module indicates the home screen module to display the clock component in the home screen, and the home screen module invokes the weather widget to draw and display, based on the configuration information of the clock component in the home screen, the clock component in the home screen. In addition, in step S110, the AOD module in the home screen system window hides or stops displaying the lock screen interface, and an uppermost-layer interface displayed in the home screen system window is switched to the home screen.

For specific implementation of steps S214 to S220, refer to the related descriptions in steps S111 to S117. Details are not described herein again.

In some other usage scenarios of the solution 2, the user completes a preset user operation. After detecting that the user completes the preset user operation (for example, a face unlock operation, a slide-to-unlock operation, or power button tapping), and determining that the operation is used to switch the lock screen interface/AOD interface to the home screen, the terminal device 100 controls the lock screen interface/AOD interface to switch to the home screen. In a switching process, the progressive interface switching animation effect provided in embodiments of this application is automatically presented. Specifically, for example, the lock screen interface is switched to the home screen. The terminal device 100 performs S201 to S206, and the lock screen module saves the configuration information of the clock component in the lock screen interface, and triggers update and obtaining of the configuration information of the clock component in the home screen. The terminal device 100 performs S208 on a specified occasion before the preset user operation, to determine whether switching between the lock screen interface and the home screen interface has the transition animation effect. After detecting that the user completes the preset user operation, and determining that the operation is used to switch the lock screen interface to the home screen, the terminal device controls the shared element (for example, the clock component) in the lock screen interface to present the transition animation effect, controls the non-shared element to present the fade-out animation effect, and performs S210 to S213. For specific implementation, refer to the related descriptions of the interface embodiments and the method procedure in FIG. 12A to FIG. 12E. Details are not described herein again.

In some other usage scenarios of the solution 2, when detecting that the terminal device 100 meets a preset condition, the terminal device 100 automatically switches the lock screen interface/AOD interface to the home screen. In a switching process, the progressive interface switching animation effect provided in embodiments of this application is automatically presented. Specifically, for example, the lock screen interface is switched to the home screen. The terminal device 100 performs S201 to S206, and the lock screen module saves the configuration information of the clock component in the lock screen interface, and triggers update and obtaining of the configuration information of the clock component in the home screen. The terminal device 100 performs S208 on a specified occasion before detecting the preset condition, to determine whether switching between the lock screen interface and the home screen interface has the transition animation effect. After detecting that the terminal device 100 meets the preset condition, the terminal device controls the shared element (for example, the clock component) in the lock screen interface to present the transition animation effect, controls the non-shared element to present the fade-out animation effect, and performs S210 to S213. For specific implementation, refer to the related descriptions of the interface embodiments and the method procedure in FIG. 12A to FIG. 12E. Details are not described herein again.

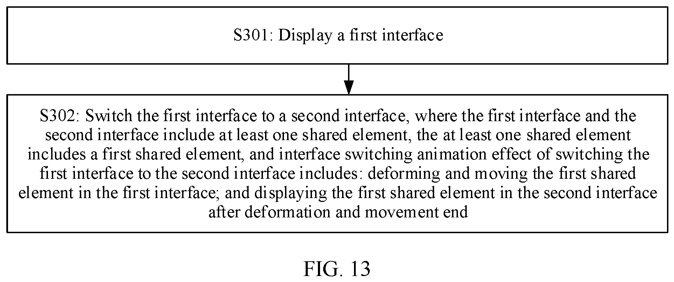

For example, as shown in FIG. 13, with reference to the foregoing embodiments, this application provides an interface switching method. The method includes steps S301 and S302.

S301: Display a first interface.

S302: Switch the first interface to a second interface, where the first interface and the second interface include at least one shared element, the at least one shared element includes a first shared element, and interface switching animation effect of switching the first interface to the second interface includes: deforming and moving the first shared element in the first interface; and display the first shared element in the second interface after deformation and movement end.

The first shared element may be the shared element 1 (for example, the clock component).

In an implementation, deforming and moving the first shared element in the first interface includes: deforming the first shared element from a first layout style to a second layout style in the first interface, and moving the first shared element from a first display location to a second display location; and displaying the first shared element in the second interface includes: displaying the first shared element at the second display location in the second interface in the second layout style.

In an implementation, an interface element other than the shared element in the first interface is a non-shared element in the first interface, and an interface element other than the shared element in the second interface is a non-shared element in the second interface; and the interface switching animation effect of switching the first interface to the second interface further includes: gradually blurring the non-shared element in the first interface until the non-shared element disappears; and gradually making the burred non-shared element in the second interface become clear.

In an implementation, the first interface and the second interface include any two of the following interfaces: a lock screen interface, an always on display AOD interface, and a home screen.

In an implementation, the first shared element is any one of the following: a clock component, a service widget, an application entry, a system tool, and the like.

In an implementation, the method further includes: detecting a sliding operation, where the sliding operation is used to switch the first interface to the second interface; and displaying, by a terminal device, a part or all of the interface switching animation effect along with the sliding operation.

In an implementation, displaying, by the terminal device, the part or all of the interface switching animation effect along with the sliding operation includes: when detecting that the sliding operation is started, with sliding of the sliding operation, deforming and moving the first shared element in the first interface, and gradually blurring the non-shared element in the first interface; and when progress of the deformation and movement reaches a first value, gradually making the initially blurred non-shared element in the second interface become clear.

In an implementation, displaying, by the terminal device, the part or all of the interface switching animation effect along with the sliding operation includes: when detecting that the sliding operation is started, with sliding of the sliding operation, deforming and moving the first shared element in the first interface, and gradually blurring the non-shared element in the first interface; and when detecting that a user ends the sliding operation, gradually making the initially blurred non-shared element in the second interface become clear.

In an implementation, when the deformation and movement end, the terminal device stops displaying the first interface and displays the second interface.

In an implementation, the first shared element presents the second layout style at the second display location in the second interface; and when detecting that the user ends the sliding operation, the terminal device performs one or more of the following: continuing to deform and move the first shared element in the first interface until the first shared element is deformed into the second layout style in the first interface and moved to the second display location; continuing to blur the non-shared element in the first interface until the non-shared element disappears; and continuing to make the non-shared element that is in the second interface and that is burred clear until the non-shared element is completely displayed.

In an implementation, switching the first interface to the second interface includes: after detecting that a first operation is completed, switching the first interface to the second interface, where the first operation is used to switch the first interface to the second interface. The first shared element may be the preset user operation.

In an implementation, switching the first interface to the second interface includes: after detecting that the terminal device meets a preset condition, switching the first interface to the second interface.

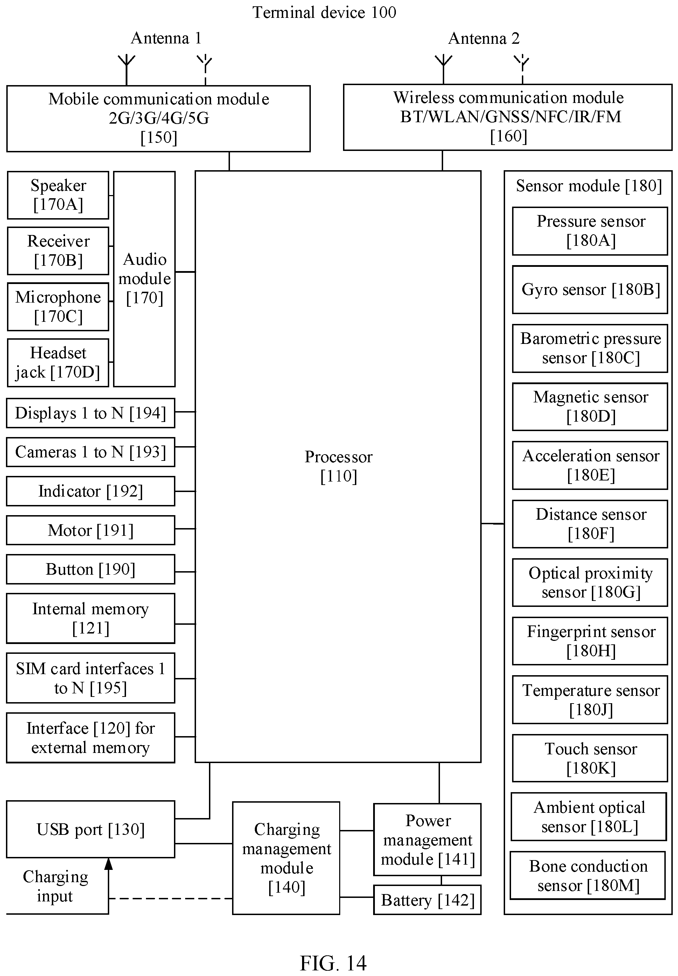

The following describes a structure of the terminal device 100 according to an embodiment of this application. FIG. 14 is a diagram of a structure of a terminal device 100.

The terminal device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) port, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the terminal device 100. The processor 110 communicates with the display 194 through the DSI interface, to implement a display function of the terminal device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is a port that conforms to a USB standard specification, and may be specifically a mini USB port, a micro USB port, a USB Type-C port, or the like. The USB port 130 may be used to connect to the charger to charge the terminal device 100, or may be used to transmit data between the terminal device 100 and a peripheral device. The USB port 130 may alternatively be configured to connect to a headset, to play an audio through the headset. The port may alternatively be configured to connect to another electronic device like an AR device.

It can be understood that an interface connection relationship between the modules shown in this embodiment of this application is merely an example for description, and does not constitute a limitation on the structure of the terminal device 100. In some other embodiments of this application, the terminal device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the terminal device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the terminal device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a solution that is applied to the terminal device 100 and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal via an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the terminal device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the terminal device 100, the antenna 1 and the mobile communication module 150 are coupled, and the antenna 2 and the wireless communication module 160 are coupled, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal device 100 implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, terminal device 100 may include one or N displays 194, where N is a positive integer greater than 1.

The terminal device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the terminal device 100 may include one or N cameras 193, where N is a positive integer greater than 1.

The digital signal processor is configured to process a digital signal, and may process another digital signal in addition to processing the digital image signal. For example, when the terminal device 100 selects a frequency, the digital signal processor is configured to perform Fourier transform on frequency energy.

The video codec is configured to compress or decompress a digital video. The terminal device 100 may support one or more video codecs. Therefore, the terminal device 100 may play or record videos in a plurality of coding formats, for example, moving picture experts group (moving picture experts group, MPEG) 1, MPEG 2, MPEG 3, and MPEG 4.

The NPU is a neural-network (neural-network, NN) computing processor. The NPU quickly processes input information by referring to a structure of a biological neural network, for example, with reference to a transfer mode between human brain neurons, and may further continuously perform self-learning. Applications such as intelligent cognition of the terminal device 100, for example, image recognition, facial recognition, speech recognition, and text understanding, may be implemented through the NPU.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM is usually referred to as DDR5 SDRAM), and the like. The non-volatile memory may include a magnetic disk storage device and a flash memory (flash memory).

The flash memory may be classified, based on an operation principle, into an NOR flash, an NAND flash, a 3D NAND flash, and the like; may be classified, based on a quantity of electric potential levels of a cell, into a single-level cell (single-level cell, SLC), a multi-level cell (multi-level cell, MLC), a triple-level cell (triple-level cell, TLC), a quad-level cell (quad-level cell, QLC), and the like; or may be classified, based on storage specifications, into a universal flash storage (English: universal flash storage, UFS), an embedded multimedia card (embedded multimedia card, eMMC), and the like.

The random access memory may be directly read and written by the processor 110. The random access memory may be configured to store an executable program (for example, machine instructions) in an operating system or another running program, and may be further configured to store data of a user, data of an application, and the like.

The non-volatile memory may also store an executable program, data of a user, data of an application, and the like, which may be loaded into the random access memory in advance for directly reading and writing by the processor 110.

The interface 120 for external memory may be configured to connect to an external non-volatile memory, to expand a storage capability of the terminal device 100. The external non-volatile memory communicates with the processor 110 through the interface 120 for external memory, to implement a data storage function. For example, a file like music or videos are stored in the external non-volatile memory.

The terminal device 100 may implement an audio function like music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal device 100 may be configured to listen to music or answer a call in a hands-free mode through the speaker 170A.

The receiver 170B, also referred to as an "earpiece", is configured to convert an audio electrical signal into a sound signal. When a call is answered or voice information is received by using the terminal device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the terminal device 100. In some other embodiments, two microphones 170C may be disposed in the terminal device 100, to collect a sound signal and further implement a noise reduction function. In some other embodiments, three, four, or more microphones 170C may alternatively be disposed in the terminal device 100, to collect a sound signal, implement noise reduction, further identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor.

The gyro sensor 180B may be configured to determine a motion posture of the terminal device 100. In some embodiments, an angular velocity of the terminal device 100 around three axes (namely, axes x, y, and z) may be determined by using the gyro sensor 180B. The gyro sensor 180B may be configured to implement image stabilization during photographing.

The barometric pressure sensor 180C is configured to measure barometric pressure. In some embodiments, the terminal device 100 calculates an altitude through the barometric pressure measured by the barometric pressure sensor 180C, to assist in positioning and navigation.

The magnetic sensor 180D includes a Hall sensor. The terminal device 100 may detect opening and closing of a flip cover by using the magnetic sensor 180D.

The acceleration sensor 180E may detect accelerations of the terminal device 100 in various directions (usually on three axes)

The distance sensor 180F is configured to measure a distance. The terminal device 100 may measure the distance in an infrared manner or a laser manner.

The optical proximity sensor 180G may include, for example, a light-emitting diode (LED) and an optical detector, for example, a photodiode. The light-emitting diode may be an infrared light-emitting diode.

The ambient light sensor 180L is configured to sense ambient light brightness. The terminal device 100 may adaptively adjust brightness of the display 194 based on the sensed ambient light brightness.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing strategy based on the temperature detected by the temperature sensor 180J.

The touch sensor 180K is also referred to as a "touch component". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor 180K. The touch sensor may transfer a detected touch operation to the application processor to determine a type of a touch event. A visual output related to the touch operation may be provided on the display 194. In some other embodiments, the touch sensor 180K may alternatively be disposed on a surface of the terminal device 100 at a location different from that of the display 194.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch button. The terminal device 100 may receive a button input, and generate a button signal input related to user setting and function control of the terminal device 100.

The motor 191 may generate a vibration prompt. The motor 191 may be configured to provide an incoming call vibration prompt, or may also be configured to provide touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card.

The implementations of this application may be randomly combined, to achieve different technical effect.

All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or a part of the processes of the methods in the foregoing embodiments may be implemented by a computer program instructing related hardware. The program may be stored in a computer-readable storage medium. When the program is run, the processes in the foregoing method embodiments are performed. The storage medium includes any medium that can store program code, such as a ROM, a random access memory RAM, a magnetic disk, or an optical disc.

In summary, what is described above is merely embodiments of the technical solutions of this application, but is not intended to limit the protection scope of this application. Any modification, equivalent replacement, improvement, or the like made based on the disclosure of this application shall fall within the protection scope of this application.

## Claims

1. An interface switching method, applied to a terminal device, wherein the method comprises:
displaying a first interface;
switching the first interface to a second interface, wherein the first interface and the second interface comprise at least one shared element, and the at least one shared element comprises a first shared element; and
interface switching animation effect of switching the first interface to the second interface comprises: deforming and moving the first shared element in the first interface; and displaying the first shared element in the second interface after deformation and movement end.

2. The method according to claim 1, wherein deforming and moving the first shared element in the first interface comprises:
deforming the first shared element from a first layout style to a second layout style in the first interface, and moving the first shared element from a first display location to a second display location; and
displaying the first shared element in the second interface comprises:
displaying the first shared element at the second display location in the second interface in the second layout style.

3. The method according to claim 1, wherein an interface element other than the shared element in the first interface is a non-shared element in the first interface, and an interface element other than the shared element in the second interface is a non-shared element in the second interface; and
the interface switching animation effect of switching the first interface to the second interface further comprises: gradually blurring the non-shared element in the first interface until the non-shared element disappears; and gradually making the burred non-shared element in the second interface become clear.

4. The method according to claim 1, wherein the first interface and the second interface comprise any two of the following interfaces: a lock screen interface, an always on display AOD interface, and a home screen.

5. The method according to claim 1, wherein the first shared element is any one of the following: a clock component, a service widget, an application entry, a system tool, and the like.

6. The method according to any one of claims 1 to 5, wherein the method further comprises: detecting a sliding operation, wherein the sliding operation is used to switch the first interface to the second interface; and
displaying, by the terminal device, a part or all of the interface switching animation effect along with the sliding operation.

7. The method according to claim 6, wherein displaying, by the terminal device, the part or all of the interface switching animation effect along with the sliding operation comprises:
when detecting that the sliding operation is started, with sliding of the sliding operation, deforming and moving the first shared element in the first interface, and gradually blurring the non-shared element in the first interface; and
when progress of the deformation and movement reaches a first value, gradually making the initially blurred non-shared element in the second interface become clear.

8. The method according to claim 6, wherein displaying, by the terminal device, the part or all of the interface switching animation effect along with the sliding operation comprises:
when detecting that the sliding operation is started, with sliding of the sliding operation, deforming and moving the first shared element in the first interface, and gradually blurring the non-shared element in the first interface; and
when detecting that a user ends the sliding operation, gradually making the initially blurred non-shared element in the second interface become clear.

9. The method according to any one of claims 1 to 8, wherein when the deformation and movement end, the terminal device stops displaying the first interface and displays the second interface.

10. The method according to any one of claims 1 to 8, wherein the first shared element presents the second layout style at the second display location in the second interface; and when detecting that the user ends the sliding operation, the terminal device performs one or more of the following: continuing to deform and move the first shared element in the first interface until the first shared element is deformed into the second layout style in the first interface and moved to the second display location; continuing to blur the non-shared element in the first interface until the non-shared element disappears; and continuing to make the non-shared element that is in the second interface and that is burred clear until the non-shared element is completely displayed.

11. The method according to claim 1, wherein switching the first interface to the second interface comprises: after detecting that a first operation is completed, switching the first interface to the second interface, wherein the first operation is used to switch the first interface to the second interface.

12. The method according to claim 1, wherein switching the first interface to the second interface comprises: after detecting that the terminal device meets a preset condition, switching the first interface to the second interface.

13. A terminal device, comprising a processor and a memory, wherein the memory is coupled to the processor, the memory is configured to store computer program code, the computer program code comprises computer instructions, and when the processor reads the computer instructions from the memory, the terminal device is enabled to perform the interface switching method according to claims 1 to 12.

14. A computer-readable storage medium, comprising computer instructions, wherein when the computer instructions are run on a terminal device, the terminal device is enabled to perform the interface switching method according to claims 1 to 12.

15. A computer program product, wherein when the computer program product runs on a computer, the computer is enabled to perform the interface switching method according to claims 1 to 12.
